# EUROPEAN PATENT APPLICATION

(11) **EP 3 731 173 A1**
(43) Date of publication of application: **28.10.2020**
(21) Application number: 17935631.6
(22) Date of filing: 21.12.2017
(51) Int. Cl.: G06Q 50/30

(54) **MOVEMENT MEANS DISPLAY METHOD, MOVEMENT MEANS DISPLAY DEVICE, AND MOVEMENT MEANS DISPLAY PROGRAM**

(71) Applicant: FUJITSU LIMITED, Kanagawa 211-8588 (JP)
(72) Inventor: IKEDA, Takuro, Kawasaki-shi, Kanagawa 211-8588 (JP); ANAN, Taizo, Kawasaki-shi, Kanagawa 211-8588 (JP); ISHIKAWA, Yuki, Kawasaki-shi, Kanagawa 211-8588 (JP)
(74) Representative: Haseltine Lake Kempner LLP
(86) International application number: PCT/JP2017/046020
(87) International publication number: WO 2019/123620

(57) **Abstract**

A computer executes: a process of selecting, based on first position information that indicates a position of a user and second position information that indicates positions of one or more respective vehicles, one or more vehicles located within a predetermined range from the position of the user, from among the one or more respective vehicles; a process of selecting, based on the first position information and third position information that indicates positions of one or more respective drivers who each drive a vehicle, one or more drivers located within a predetermined range from the position of the user, from among the one or more respective drivers; and a process of displaying, on a terminal used by the user, at least any two types of services from among a service in which any one of the selected one or more vehicles is lent to the user, a service in which any one of the selected one or more drivers drives a vehicle of the user as a substitute driver, and a service in which any one of the selected one or more drivers drives a vehicle other than the vehicle of the user to transport the user.

## Description

### TECHNICAL FIELD

The present invention relates to a moving means display method, a moving means display device, and a moving means display program.

### BACKGROUND ART

There is known a reservation system that allows a terminal such as a smartphone or a personal computer (PC) to be used to reserve the use of a service (transportation service) in which a person else transports a user by a taxi, a private car, or the like. In such a reservation system, for example, by designating a departure place indicating the position of the terminal measured by a global positioning system (GPS) receiver or the like and a destination desired by the user, the required time, usage charge, and the like from the departure place to the destination are displayed on the terminal.

Meanwhile, there is known a reservation system that allows a terminal such as a smartphone or a PC to be used to reserve the use of a service for lending a vehicle (vehicle lending service), such as a rental car or car sharing. In such a reservation system, for example, by designating the wanted use time zone and the like from the terminal, the available start time zone, usage charge, and the like are displayed on the terminal.

Similarly, there is also known a reservation system that allows a terminal such as a smartphone or a PC to be used to reserve the use of a service (substitute driver service) in which a person else drives a vehicle of a user as a substitute driver. In such a reservation system, for example, by designating the use start location, the use start time, and the like from the terminal, a time at which the substitute driver arrives at the use start location, the usage charge, and the like are displayed on the terminal.

### CITATION LIST

### PATENT DOCUMENT

Patent Document 1: Japanese Laid-open Patent Publication No. 2002-163335
Patent Document 2: Japanese Laid-open Patent Publication No. 2008-71325

### SUMMARY OF INVENTION

### TECHNICAL PROBLEM

However, in the past, there have been cases where the needs of users who want to first compare various services such as transportation services, vehicle lending services, and substitute driver services (hereinafter, referred to as "moving services") and then decide a moving service to be used cannot be met.

For example, when a user who does not own a vehicle heads for a certain destination, the user sometimes wants to first compare the usage charge, convenience, and the like between the transportation service such as a taxi and the vehicle lending service such as a rental car, and then decide which service to use. However, for example, in order to compare the usage charge of the transportation service with the usage charge of the vehicle lending service, it is necessary to confirm the usage charge using a reservation system for reserving the use of each service.

Similarly, for example, when a user who owns a vehicle heads for a certain destination, the user sometimes wants to first compare the usage charge, convenience, and the like between the substitute driver service for having the own vehicle of the user be driven using a substitute driver, and the transportation service such as a taxi, and then decide which service to use. Similarly, also in this case, in order to compare the usage charge of the substitute driver service with the usage charge of the transportation service, it has been necessary to confirm the usage charge using a reservation system for reserving the use of each service.

In one aspect, the present invention aims to enhance the variety of options presented to a user.

### SOLUTION TO PROBLEM

In one exemplary form, a computer executes: a process of selecting, based on first position information that indicates a position of a user and second position information that indicates positions of one or more respective vehicles, one or more vehicles located within a predetermined range from the position of the user, from among the one or more respective vehicles; a process of selecting, based on the first position information and third position information that indicates positions of one or more respective drivers who each drive a vehicle, one or more drivers located within a predetermined range from the position of the user, from among the one or more respective drivers; and a process of displaying, on a terminal used by the user, at least any two types of services from among a service in which any one of the selected one or more vehicles is lent to the user, a service in which any one of the selected one or more drivers drives a vehicle of the user as a substitute driver, and a service in which any one of the selected one or more drivers drives a vehicle other than the vehicle of the user to transport the user.

### ADVANTAGEOUS EFFECTS OF INVENTION

The variety of options presented to the user can be enhanced.

### BRIEF DESCRIPTION OF DRAWINGS

FIG. 1 is a diagram illustrating an exemplary overall configuration of a moving service reservation system according to a first embodiment.
FIG. 2 is a diagram for explaining an example of moving services presented to a user.
FIG. 3 is a diagram illustrating an exemplary hardware configuration of a reservation management device according to the first embodiment.
FIG. 4 is a diagram illustrating an exemplary hardware configuration of a user terminal according to the first embodiment.
FIG. 5 is a diagram illustrating an exemplary hardware configuration of a provider terminal according to the first embodiment.
FIG. 6 is a diagram illustrating an exemplary hardware configuration of an in-vehicle device according to the first embodiment.
FIG. 7 is a diagram illustrating an exemplary functional configuration of the moving service reservation system according to the first embodiment.
FIG. 8 is a diagram illustrating exemplary user data.
FIG. 9 is a diagram illustrating exemplary provider data.
FIG. 10 is a diagram illustrating exemplary vehicle data.
FIG. 11 is a diagram illustrating exemplary position data.
FIG. 12 is a diagram illustrating exemplary map data.
FIG. 13 is a diagram (part 1) illustrating exemplary schedule data.
FIG. 14 is a diagram (part 2) illustrating exemplary schedule data.
FIG. 15 is a diagram illustrating exemplary reservation data.
FIG. 16 is a diagram illustrating exemplary settlement data.
FIG. 17 is a sequence diagram illustrating an exemplary process of acquiring position data on the provider terminal according to the first embodiment.
FIG. 18 is a sequence diagram illustrating an exemplary process of acquiring position data on the in-vehicle device according to the first embodiment.
FIGs. 19A and 19B are a sequence diagram illustrating an exemplary service reservation process according to the first embodiment.
FIG. 20 is a diagram illustrating exemplary screens displayed on the user terminal.
FIG. 21 is a diagram illustrating an exemplary screen displayed on the provider terminal.
FIGs. 22A and 22B are a flowchart illustrating an exemplary moving service candidate selection process according to the first embodiment.
FIG. 23 is a diagram for explaining an example of a required time before providing the service, a required time during providing the service, and a required time after providing the service by a provider that can provide a transportation service.
FIG. 24 is a flowchart illustrating an exemplary usage charge computation process according to the first embodiment.
FIG. 25 is a diagram illustrating an exemplary charge table.
FIG. 26 is a sequence diagram illustrating an exemplary service use end process according to the first embodiment.
FIG. 27 is a diagram illustrating an exemplary functional configuration of a moving service reservation system according to a second embodiment.
FIGs. 28A and 28B are a flowchart illustrating an exemplary moving service candidate selection process according to the second embodiment.
FIG. 29 is a diagram schematically illustrating an example of a case where a different moving service is allowed to be provided by separating or combining moving services.
FIGs. 30A and 30B are a flowchart illustrating another exemplary moving service candidate selection process according to the second embodiment.
FIG. 31 is a diagram for explaining an example of a case where a relevant moving service is allowed to be provided by using another moving service.
FIG. 32 is a flowchart illustrating an exemplary usage charge computation process according to the second embodiment.
FIG. 33 is a diagram illustrating an exemplary additional charge table.

### DESCRIPTION OF EMBODIMENTS

Embodiments of the present invention will be described below with reference to the attached drawings. Hereinafter, a moving service reservation system 1 that presents a plurality of moving services to a user will be described. In the present embodiments, the moving service is assumed to include a "transportation service", which is a service for transporting a user by a taxi, a private car, or the like; a "vehicle lending service", which is a service for lending a vehicle to a user; and a "substitute driver service", which is a service for driving a vehicle as a substitute driver.

### (First Embodiment)

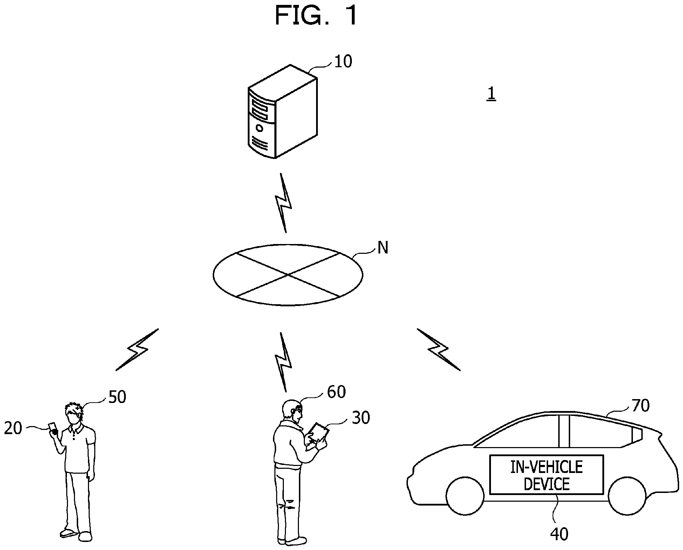

First, an overall configuration of the moving service reservation system 1 according to the present embodiment will be described with reference to FIG. 1. FIG. 1 is a diagram illustrating an exemplary overall configuration of the moving service reservation system 1 according to a first embodiment.

As illustrated in FIG. 1, the moving service reservation system 1 according to the present embodiment includes a reservation management device 10, a user terminal 20, a provider terminal 30, and an in-vehicle device 40. Furthermore, the reservation management device 10, the user terminal 20, the provider terminal 30, and the in-vehicle device 40 are connected so as to be able to communicate via a network N such as the Internet and the like.

The reservation management device 10 is one or more computers that manage the reservation of a moving service. Upon receiving a request from the user terminal 20 operated by a user 50 who reserves and uses a moving service, the reservation management device 10 presents the user 50 with a plurality of moving services. At this time, the reservation management device 10 presents, for example, a plurality of moving services available around the departure place (or a location where the use of the moving service is started, or the like) designated by the user 50.

With this configuration, the user terminal 20 displays a plurality of moving services available around the departure place (or a location where the use of the moving service is started, or the like) designated by the user 50. The user 50 selects a moving service to be used from among the plurality of moving services displayed on the user terminal 20, thereby being able to reserve the selected moving service.

The user terminal 20 is, for example, a smartphone, a tablet terminal, or the like, and is a terminal device operated by the user 50 who reserves and uses the moving service. In response to the operation of the user 50, the user terminal 20 transmits, for example, a request for displaying a moving service available around the current position of the user 50 to the reservation management device 10.

The provider terminal 30 is, for example, a smartphone, a tablet terminal, or the like, and is a terminal device operated by a provider 60 that provides a transportation service or a substitute driver service. The provider terminal 30 transmits position data indicating the current position of the provider terminal 30 to the reservation management device 10 at predetermined time intervals, for example. With this configuration, in response to the request from the user terminal 20, the reservation management device 10 can select, for example, a provider 60 that provides a transportation service or a substitute driver service available around the departure place designated by the user 50 of the user terminal 20. Hereinafter, when a plurality of providers 60 is distinguished from each other, the providers 60 are referred to as "provider 60-1", "provider 60-2", "provider 60-3", and so forth.

Note that the user terminal 20 and the provider terminal 30 are not limited to a smartphone or a tablet terminal or the like, and may be, for example, a wearable device, a personal digital assistant (PDA), a game machine, a PC, or the like.

The in-vehicle device 40 is an instrument mounted on a vehicle 70 that can be lent by a vehicle lending service or a vehicle 70 used for a transportation service. The in-vehicle device 40 transmits position data indicating the current position of the vehicle 70 to the reservation management device 10 at predetermined time intervals, for example. With this configuration, in response to the request from the user terminal 20, the reservation management device 10 can select, for example, a vehicle 70 lent for a vehicle lending service available around the departure place designated by the user 50 of the user terminal 20. Hereinafter, when a plurality of vehicles 70 is distinguished from each other, the vehicles 70 are referred to as "vehicle 70-1", "vehicle 70-2", "vehicle 70-3", and so forth.

Note that, in the moving service reservation system 1 according to the present embodiment, the provider terminal 30 may be used as the in-vehicle device 40. In this case, the current position of the provider terminal 30 can be used as the current position of the vehicle 70.

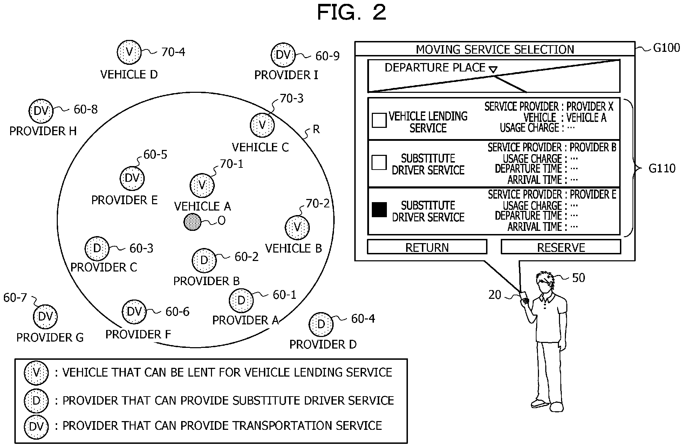

Here, the moving services presented to the user 50 will be described with reference to FIG. 2. FIG. 2 is a diagram for explaining an example of moving services presented to the user 50. In FIG. 2, a description will be given of a case where a plurality of moving services available around a departure place O (for example, the current position of the user 50) designated by the user 50 is displayed on the user terminal 20.

In FIG. 2, as an example, it is assumed that there are providers 60-1 to 60-4 that can provide substitute driver services, providers 60-5 to 60-9 that can provide transportation services, and vehicles 70-1 to 70-4 that can be lent by vehicle lending services. At this time, in response to the request from the user terminal 20 (a moving service presentation request), the reservation management device 10 selects providers 60 and vehicles 70 located within a predetermined range R about the departure place O (for example, within a circular area represented with a radius of several hundred meters to several kilometers, and the like). In the example illustrated in FIG. 2, the providers 60-1 to 60-3 that can provide substitute driver services, the providers 60-5 and 60-6 that can provide transportation services, and the vehicles 70-1 to 70-3 that can be lent by vehicle lending services are selected. The transportation services and the substitute driver services provided by the selected providers 60 and the vehicle lending services that lend the selected vehicles 70 are regarded as candidates for the moving services presented to the user 50 (hereinafter, referred to as "moving service candidate").

Next, the reservation management device 10 selects a plurality of moving services to be presented to the user 50 from among the moving service candidates. For example, the reservation management device 10 selects one provider 60 closest to the departure place O from among the selected providers 60-1 to 60-3. Similarly, the reservation management device 10 selects one provider 60 closest to the departure place O from among the selected providers 60-5 and 60-6. Furthermore, similarly, the reservation management device 10 selects one vehicle 70 closest to the departure place O from among the selected vehicles 70-1 to 70-3.

In the example illustrated in FIG. 2, the substitute driver service provider 60-2 (provider B), the transportation service provider 60-5 (provider E), and the vehicle lending service vehicle 70-1 (vehicle A) are selected.

Then, the reservation management device 10 displays the selected moving services on the user terminal 20. In consequence, the user terminal 20 displays a moving service selection screen G100. The moving service selection screen G100 includes a moving service list G110 in which usage charges and the like of a plurality of moving services available for the user 50 (in the example illustrated in FIG. 2, "vehicle lending service", "substitute driver service", and "transportation service") are displayed in a list. The user 50 selects a moving service to be used from the moving service list G110, thereby being able to reserve the selected moving service.

As described above, in the moving service reservation system 1 according to the present embodiment, a plurality of moving services is displayed on the user terminal 20. With this configuration, the user 50 can reserve a desired moving service while easily comparing the usage charges and the like of a plurality of moving services.

For example, when a user 50 who does not own a vehicle heads for a certain destination, the user can first compare the usage charge, convenience, and the like between the transportation service and the vehicle lending service, and then decide which service to use. For example, the usage charge of the transportation service is higher than the usage charge of the vehicle lending service, but if, for example, the usage charge is within an allowable range, the user 50 can choose to decide on the use of the transportation service that is more convenient than the vehicle lending service.

Similarly, for example, when a user 50 who owns a vehicle heads for a certain destination, the user can first compare the usage charge, convenience, and the like between the substitute driver service and the transportation service, and then decide which service to use. For example, the usage charge of the transportation service is higher than the usage charge of the substitute driver service, but if, for example, the usage charge is within an allowable range, the user 50 can choose to decide on the use of the transportation service that is more convenient than the substitute driver service.

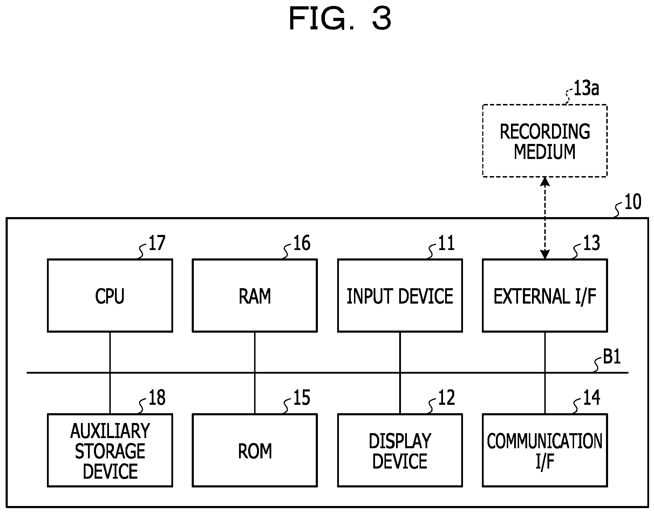

Next, a hardware configuration of the reservation management device 10 according to the present embodiment will be described with reference to FIG. 3. FIG. 3 is a diagram illustrating an exemplary hardware configuration of the reservation management device 10 according to the first embodiment.

As illustrated in FIG. 3, the reservation management device 10 according to the present embodiment includes an input device 11, a display device 12, an external interface (I/F) 13, a communication I/F 14, and a read only memory (ROM) 15. Furthermore, the reservation management device 10 according to the present embodiment includes a random access memory (RAM) 16, a central processing unit (CPU) 17, and an auxiliary storage device 18. These respective pieces of hardware are each mutually connected by a bus B1.

The input device 11 is, for example, a keyboard, a mouse, a touch panel, or the like, and is used to input various operations to the reservation management device 10. The display device 12 is, for example, a display or the like, and displays various processing results by the reservation management device 10. Note that the reservation management device 10 may not include at least one of the input device 11 and the display device 12.

The external I/F 13 is an interface with an external device. The external device includes a recording medium 13a and the like. The reservation management device 10 can perform reading and writing on the recording medium 13a via the external I/F 13. Examples of the recording medium 13a include a compact disc (CD), a digital versatile disc (DVD), a secure digital memory card (SD memory card), a universal serial bus (USB) memory, and the like.

The communication I/F 14 is an interface for connecting the reservation management device 10 to the network N. The reservation management device 10 can communicate with another device via the communication I/F 14. The ROM 15 is a nonvolatile semiconductor memory capable of retaining data even when the power is turned off. The RAM 16 is a volatile semiconductor memory that temporarily retains programs and data. The CPU 17 is, for example, an arithmetic device that reads out programs and data from the auxiliary storage device 18 or the ROM 15 or the like onto the RAM 16, and executes various processes.

The auxiliary storage device 18 is, for example, a hard disk drive (HDD), a solid state drive (SSD), or the like, and is a nonvolatile memory that accumulates programs and data. The auxiliary storage device 18 accumulates, for example, an operating system (OS), application programs that implement various functions on the OS, and the like.

The reservation management device 10 according to the present embodiment can implement various processes described later by having the hardware configuration illustrated in FIG. 3.

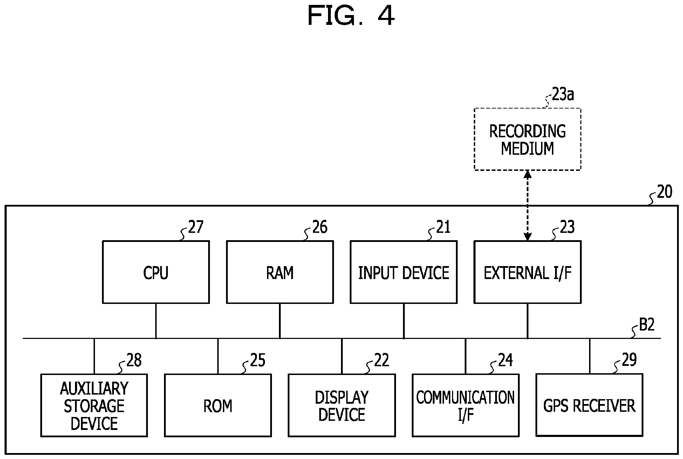

Next, a hardware configuration of the user terminal 20 according to the present embodiment will be described with reference to FIG. 4. FIG. 4 is a diagram illustrating an exemplary hardware configuration of the user terminal 20 according to the first embodiment.

As illustrated in FIG. 4, the user terminal 20 according to the present embodiment includes an input device 21, a display device 22, an external I/F 23, and a communication I/F 24. Furthermore, the user terminal 20 according to the present embodiment includes a ROM 25, a RAM 26, a CPU 27, an auxiliary storage device 28, and a GPS receiver 29. These respective pieces of hardware are each mutually connected by a bus B2.

The input device 21 is, for example, a touch panel or the like, and is used to input various operations to the user terminal 20. The display device 22 is, for example, a display or the like, and displays various processing results by the user terminal 20.

The external I/F 23 is an interface with an external device. The external device includes a recording medium 23a and the like. The user terminal 20 can perform reading and writing on the recording medium 23a via the external I/F 23. Examples of the recording medium 23a include an SD memory card, a USB memory, and the like.

The communication I/F 24 is an interface for connecting the user terminal 20 to the network N. The user terminal 20 can communicate with another device via the communication I/F 24. The ROM 25 is a nonvolatile semiconductor memory capable of retaining data even when the power is turned off. The RAM 26 is a volatile semiconductor memory that temporarily retains programs and data. The CPU 27 is, for example, an arithmetic device that reads out programs and data from the auxiliary storage device 28 or the ROM 25 or the like onto the RAM 26, and executes various processes.

The auxiliary storage device 28 is a nonvolatile semiconductor memory that accumulates programs and data. The auxiliary storage device 28 accumulates, for example, an OS, application programs that implement various functions on the OS, and the like. The GPS receiver 29 receives a predetermined radio wave from a GPS and measures the current position of the user terminal 20.

The user terminal 20 according to the present embodiment can implement various processes described later by having the hardware configuration illustrated in FIG. 4.

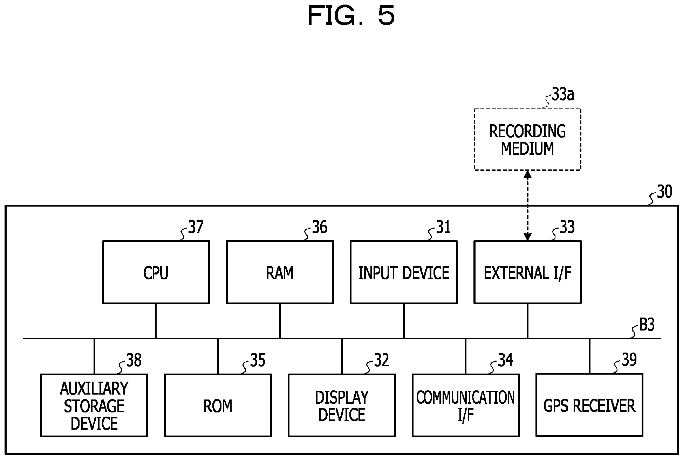

Next, a hardware configuration of the provider terminal 30 according to the present embodiment will be described with reference to FIG. 5. FIG. 5 is a diagram illustrating an exemplary hardware configuration of the provider terminal 30 according to the first embodiment.

As illustrated in FIG. 5, the provider terminal 30 according to the present embodiment includes an input device 31, a display device 32, an external I/F 33, and a communication I/F 34. Furthermore, the provider terminal 30 according to the present embodiment includes a ROM 35, a RAM 36, a CPU 37, an auxiliary storage device 38, and a GPS receiver 39. These respective pieces of hardware are each mutually connected by a bus B3. Note that the respective pieces of hardware included in the provider terminal 30 are each similar to the respective pieces of hardware included in the user terminal 20, and thus a description thereof will be omitted.

The provider terminal 30 according to the present embodiment can implement various processes described later by having the hardware configuration illustrated in FIG. 5.

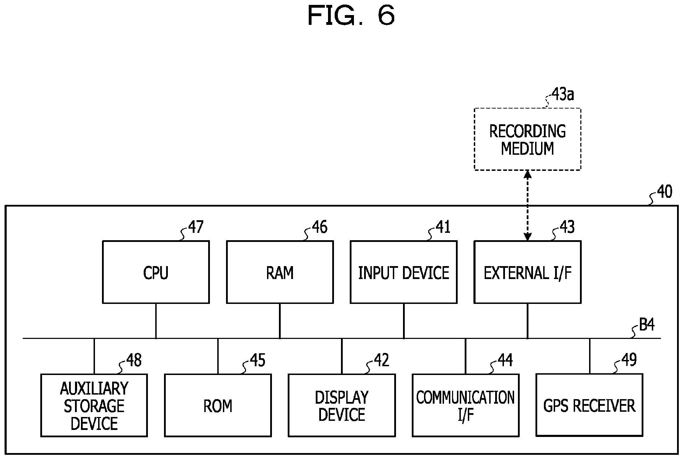

Next, a hardware configuration of the in-vehicle device 40 according to the present embodiment will be described with reference to FIG. 6. FIG. 6 is a diagram illustrating an exemplary hardware configuration of the in-vehicle device 40 according to the first embodiment.

As illustrated in FIG. 6, the in-vehicle device 40 according to the present embodiment includes an input device 41, a display device 42, an external I/F 43, and a communication I/F 44. Furthermore, the in-vehicle device 40 according to the present embodiment includes a ROM 45, a RAM 46, a CPU 47, an auxiliary storage device 48, and a GPS receiver 49. These respective pieces of hardware are each mutually connected by a bus B4. Note that the respective pieces of hardware included in the in-vehicle device 40 are each similar to the respective pieces of hardware included in the user terminal 20, and thus a description thereof will be omitted.

The in-vehicle device 40 according to the present embodiment can implement various processes described later by having the hardware configuration illustrated in FIG. 6.

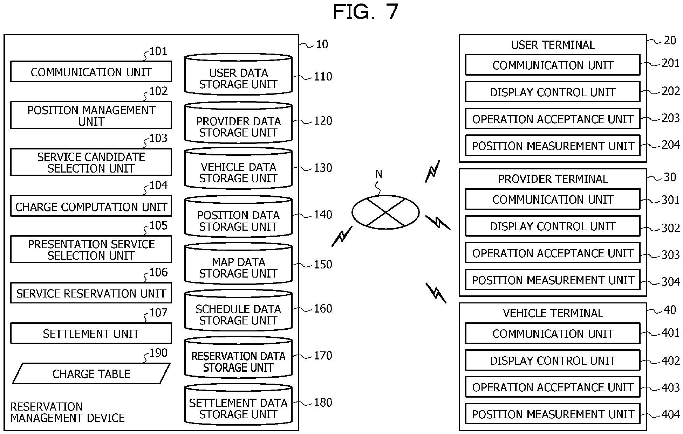

Next, a functional configuration of the moving service reservation system 1 according to the present embodiment will be described with reference to FIG. 7. FIG. 7 is a diagram illustrating an exemplary functional configuration of the moving service reservation system 1 according to the first embodiment.

As illustrated in FIG. 7, the user terminal 20 according to the present embodiment includes a communication unit 201, a display control unit 202, an operation acceptance unit 203, and a position measurement unit 204. Each of these units is implemented by a process that one or more programs installed in the user terminal 20 cause the CPU 27 to execute.

The communication unit 201 performs communication with the reservation management device 10. For example, the communication unit 201 transmits a moving service reservation request to the reservation management device 10. Furthermore, for example, the communication unit 201 receives, from the reservation management device 10, a reservation completion notification indicating that the reservation of the moving service has been completed.

The display control unit 202 displays various screens. For example, the display control unit 202 displays the moving service selection screen and the like. The operation acceptance unit 203 accepts various operations by the user 50. For example, the operation acceptance unit 203 accepts a selection operation for a moving service by the user 50, and the like. The position measurement unit 204 measures the current position of the user terminal 20 using the GPS receiver 29.

As illustrated in FIG. 7, the provider terminal 30 according to the present embodiment includes a communication unit 301, a display control unit 302, an operation acceptance unit 303, and a position measurement unit 304. Each of these units is implemented by a process that one or more programs installed in the provider terminal 30 cause the CPU 37 to execute.

The communication unit 301 performs communication with the reservation management device 10. For example, the communication unit 301 transmits position data indicating a position measured by the position measurement unit 304 to the reservation management device 10.

The display control unit 302 displays various screens. For example, in response to a request from the reservation management device 10, the display control unit 302 displays a screen for selecting whether or not to agree to the reservation of a moving service selected by the user 50 (service provision agreement/rejection screen).

The operation acceptance unit 303 accepts various operations by the provider 60. For example, the operation acceptance unit 303 accepts an operation on the service provision agreement/rejection screen (for example, an operation for agreeing to the provision of the moving service or an operation for rejecting the provision of the moving service). The position measurement unit 304 measures the current position of the provider terminal 30 using the GPS receiver 39.

As illustrated in FIG. 7, the in-vehicle device 40 according to the present embodiment includes a communication unit 401, a display control unit 402, an operation acceptance unit 403, and a position measurement unit 404. Each of these units is implemented by a process that one or more programs installed in the in-vehicle device 40 cause the CPU 47 to execute.

The communication unit 401 performs communication with the reservation management device 10. For example, the communication unit 401 transmits position data indicating a position measured by the position measurement unit 404 to the reservation management device 10.

The display control unit 402 displays various screens. The operation acceptance unit 403 accepts various operations by the provider 60. The position measurement unit 404 measures the current position of the in-vehicle device 40 using the GPS receiver 49.

As illustrated in FIG. 7, the reservation management device 10 according to the present embodiment includes a communication unit 101, a position management unit 102, a service candidate selection unit 103, a charge computation unit 104, a presentation service selection unit 105, a service reservation unit 106, and a settlement unit 107. Each of these units is implemented by a process that one or more programs installed in the reservation management device 10 cause the CPU 17 to execute.

Furthermore, the reservation management device 10 according to the present embodiment includes a user data storage unit 110, a provider data storage unit 120, a vehicle data storage unit 130, a position data storage unit 140, a map data storage unit 150, a schedule data storage unit 160, a reservation data storage unit 170, and a settlement data storage unit 180. Each of these storage units can be implemented using, for example, the auxiliary storage device 18. Note that at least one storage unit out of these respective storage units may be implemented using a storage device or the like connected to the reservation management device 10 via a network.

The communication unit 101 performs communication with other devices (for example, the user terminal 20, the provider terminal 30, and the in-vehicle device 40). For example, the communication unit 101 receives a moving service reservation request from the user terminal 20. Furthermore, for example, the communication unit 101 transmits a reservation completion notification to the user terminal 20.

The position management unit 102 manages position data indicating the position of the provider terminal 30 and position data indicating the position of the in-vehicle device 40. That is, the position management unit 102 stores the position data received from the provider terminal 30 and the position data received from the in-vehicle device 40 in the position data storage unit 140.

The service candidate selection unit 103 selects a moving service candidate in response to a request (moving service presentation request) from the user terminal 20. Here, the moving service presentation request includes diverse conditions designated by the user 50. Such conditions include, for example, information indicating which of "trip reservation" or "time zone reservation" is the moving service reservation method. The trip reservation is a reservation method in which at least the departure place, the destination, and the departure time are designated. Meanwhile, the time zone reservation is a reservation method in which at least the use start location, the use start time, and the use end time are designated. Hereinafter, it is assumed that the moving service reservation method includes two methods: "trip reservation" and "time zone reservation".

The service candidate selection unit 103 selects a transportation service and a substitute driver service provided by the providers 60 located within a predetermined range from the departure place or the use start location designated by the user 50, and a vehicle lending service that lends the vehicle 70 present within the range. In other words, the service candidate selection unit 103 selects a provider 60 that is located within the range and provides at least one service out of the transportation service and the substitute driver service, and a vehicle 70 that is located within the range and is lent by the vehicle lending service.

At this time, the service candidate selection unit 103 refers to the position data storage unit 140 and the map data storage unit 150 to calculate a required time before providing the service, the required time during providing the service, and a required time after providing the service for the moving service. Note that, hereinafter, the required time before providing the service is also referred to as "time before provision", the required time during providing the service is also referred to as "time during provision", and the required time after providing the service is also referred to as "time after provision".

Then, the service candidate selection unit 103 refers to the schedule data storage unit 160 to select a moving service candidate that can be provided to the user 50, on the basis of the time before provision, the time during provision, and the time after provision.

The time before provision is a time required before providing the moving service, and for example, is a time until the provider 60 arrives at the departure place or the use start location. The time during provision is a time during which the moving service is being provided, and for example, is a time until arriving at the destination from the departure place or a time from the use start time to the use end time. The time after provision is a time required after providing the moving service, and for example, is a time until the provider 60 arrives at the original location (for example, the home of the provider 60, and the like) from the destination.

Here, besides the departure place, destination, departure time, use start location, use start time, use end time, and the like, diverse conditions designated by the user 50 (these conditions are also referred to as "optional conditions") are included in the moving service presentation request in some cases. For example, the conditions relating to the transportation service and the substitute driver service sometimes include "driver is same gender". Furthermore, for example, the conditions relating to the vehicle lending service sometimes include "vehicle type", "model year", "wheelchair accessibility", "permission/restriction of smoking", and the like of the vehicle 70 to be lent. In this case, the service candidate selection unit 103 refers to at least one storage unit out of the user data storage unit 110, the provider data storage unit 120, and the vehicle data storage unit 130 to select a moving service candidate that satisfies the optional conditions.

The charge computation unit 104 refers to a charge table 190 to compute the usage charge of the moving service candidate selected by the service candidate selection unit 103. The charge table 190 is a table in which unit prices for computing usage charges are accumulated for each service type indicating the type of moving service. The charge table 190 is stored in, for example, the auxiliary storage device 18. Note that the details of the charge table 190 will be described later.

The presentation service selection unit 105 selects a plurality of moving services to be presented to the user 50 from among the moving service candidates selected by the service candidate selection unit 103. For example, the presentation service selection unit 105 selects a predetermined number (for example, one) of moving services in the order from the closest one to the departure place or the use start location in each service type.

The service reservation unit 106 reserves a moving service selected by the user 50 in response to a request from the user terminal 20. That is, the service reservation unit 106 creates schedule data to be described later to store the created schedule data in the schedule data storage unit 160, and also creates reservation data to be described later to store the created reservation data in the reservation data storage unit 170.

The settlement unit 107 settles the usage charge of the moving service when the user 50 uses the moving service. That is, the settlement unit 107 creates settlement data to be described later to store the created settlement data in the settlement data storage unit 180.

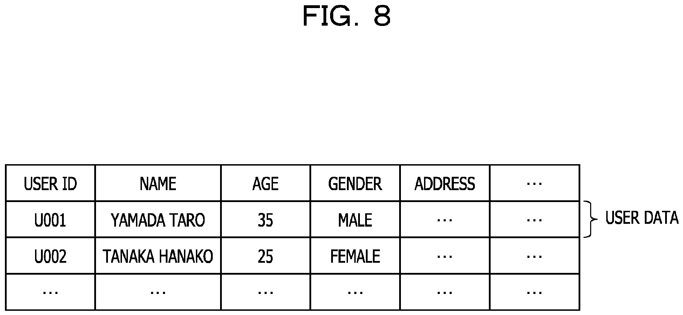

The user data storage unit 110 stores user data. The user data stored in the user data storage unit 110 will be described with reference to FIG. 8. FIG. 8 is a diagram illustrating exemplary user data.

As illustrated in FIG. 8, the user data includes, as data items, a user ID, a name, an age, a gender, and an address. In the data item "user ID", a user ID, which is identification information that identifies the user 50, is set. In the data item "name", the family name and given name of the user 50 are set. In the data item "age", the age of the user 50 is set. In the data item "gender", the gender of the user 50 is set. In the data item "address", the address of the user 50 is set.

The user data is stored in the user data storage unit 110 in advance. The user data is created by the user 50 using the user terminal 20 or the like when the user 50 starts using the moving service reservation system 1, for example.

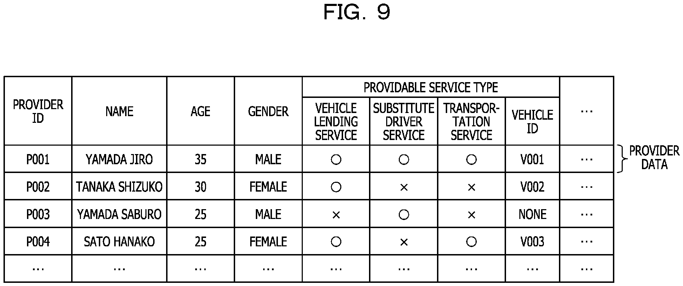

The provider data storage unit 120 stores provider data. The provider data stored in the provider data storage unit 120 will be described with reference to FIG. 9. FIG. 9 is a diagram illustrating exemplary provider data.

As illustrated in FIG. 9, the provider data includes, as data items, a provider ID, a name, an age, a gender, a providable service type, and a vehicle ID. In the data item "provider ID", a provider ID, which is identification information that identifies the provider 60, is set. In the data item "name", the family name and given name of the provider 60 are set. In the data item "age", the age of the provider 60 is set. In the data item "gender", the gender of the provider 60 is set.

In the data item "providable service type", whether or not the provider 60 can provide the moving service is set for each service type.

For example, in provider data with a provider ID "P001", "○" is set for "vehicle lending service", "substitute driver service", and "transportation service". This indicates that a provider 60 identified by the provider ID "P001" can provide the vehicle lending service, the substitute driver service, and the transportation service.

Furthermore, for example, in provider data with a provider ID "P002", "○" is set for "vehicle lending service", while "×" is set for "substitute driver service" and "transportation service". This indicates that a provider 60 identified by the provider ID "P002" can provide the vehicle providing service, but cannot provide the substitute driver service and the transportation service.

Similarly, for example, in provider data with a provider ID "P003", "○" is set for "substitute driver service", while "×" is set for "vehicle lending service" and "transportation service". This indicates that a provider 60 identified by the provider ID "P003" can provide the substitute driver service, but cannot provide the vehicle lending service and the transportation service.

In the data item "vehicle ID", a vehicle ID is set when "○" is set in at least one of "vehicle lending service" and "transportation service" in the data item "providable service type". The vehicle ID is identification information that identifies the vehicle 70. When the vehicle ID is set in the data item "vehicle ID", this vehicle ID associates the provider data with vehicle data.

For example, a vehicle ID "V002" is set in the provider data with the provider ID "P002". This indicates that, in the vehicle lending service provided by the provider 60 identified by the provider ID "P002", a vehicle 70 identified by the vehicle ID "V002" is lent.

Furthermore, for example, a vehicle ID "V001" is set in the provider data with the provider ID "P001". This indicates that, in the vehicle lending service provided by the provider 60 identified by the provider ID "P001", a vehicle 70 identified by the vehicle ID "V001" is lent, and additionally, in the transportation service, the vehicle 70 identified by the vehicle ID "V001" is used.

Note that, when both of "vehicle lending service" and "transportation service" are set with "○" in the data item "providable service type", the vehicle ID of a vehicle 70 lent for the vehicle lending service and the vehicle ID of a vehicle 70 used in the transportation service may be set in the data item "vehicle ID".

The provider data is stored in the provider data storage unit 120 in advance. The provider data is created by the provider 60 using the provider terminal 30 or the like when the provider 60 starts providing the moving service via the moving service reservation system 1, for example.

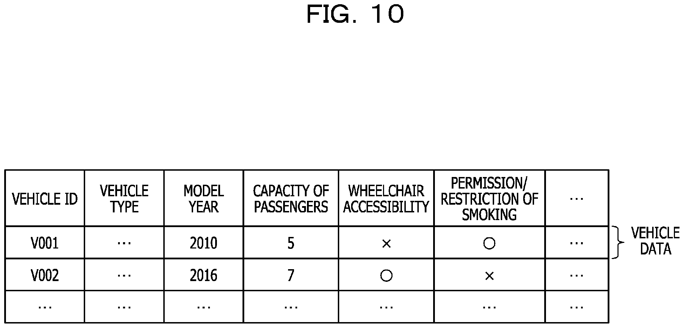

The vehicle data storage unit 130 stores vehicle data. The vehicle data stored in the vehicle data storage unit 130 will be described with reference to FIG. 10. FIG. 10 is a diagram illustrating exemplary vehicle data.

As illustrated in FIG. 10, the vehicle data includes, as data items, a vehicle ID, a vehicle type, a model year, a capacity of passengers, wheelchair accessibility, and permission/restriction of smoking. In the data item "vehicle ID", a vehicle ID, which is identification information that identifies the vehicle 70, is set. In the data item "vehicle type", the vehicle type of the vehicle 70 is set. In the data item "model year", the model year of the vehicle 70 is set. In the data item "capacity of passengers", the capacity of passengers allowed to get on the vehicle 70 is set. In the data item "wheelchair accessibility", whether or not the vehicle 70 is accessible for a wheelchair used when getting on is set. In the data item "permission/restriction of smoking", whether or not smoking in the vehicle 70 is permitted is set. Note that, besides these data items, the vehicle data may include, for example, a data item in which information indicating whether the vehicle is an automatic transmission (AT) car or a manual transmission (MT) car is set, and the like.

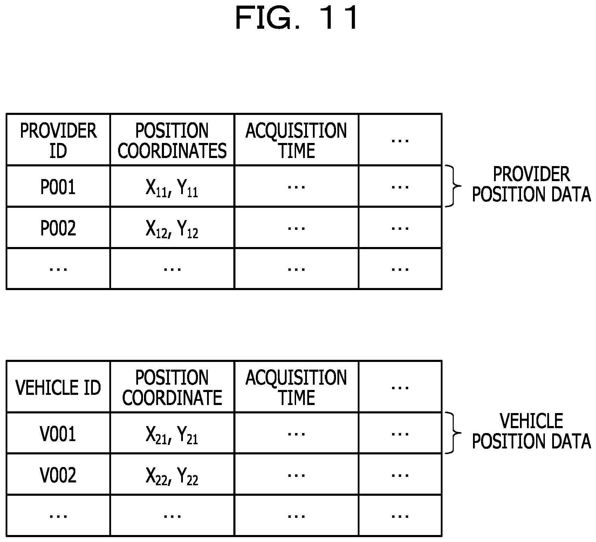

The position data storage unit 140 stores position data. The position data stored in the position data storage unit 140 will be described with reference to FIG. 11. FIG. 11 is a diagram illustrating exemplary position data.

As illustrated in FIG. 11, the position data includes provider position data indicating the position of the provider 60 (that is, the position of the provider terminal 30), and vehicle position data indicating the position of the vehicle 70 (that is, the position of the in-vehicle device 40).

The provider position data includes, as data items, a provider ID, position coordinates, and an acquisition time. In the data item "provider ID", a provider ID, which is identification information that identifies the provider 60, is set. In the data item "position coordinates", latitude and longitude indicating the position of the provider 60 are set. In the data item "acquisition time", a time at which the position is measured by the provider terminal 30 (or a time at which the position data is received from the provider terminal 30) is set.

The vehicle position data includes, as data items, a vehicle ID, position coordinates, and an acquisition time. In the data item "vehicle ID", a vehicle ID, which is identification information that identifies the vehicle 70, is set. In the data item "position coordinates", latitude and longitude indicating the position of the vehicle 70 are set. In the data item "acquisition time", a time at which the position is measured by the in-vehicle device 40 (or a time at which the position data is received from the in-vehicle device 40) is set.

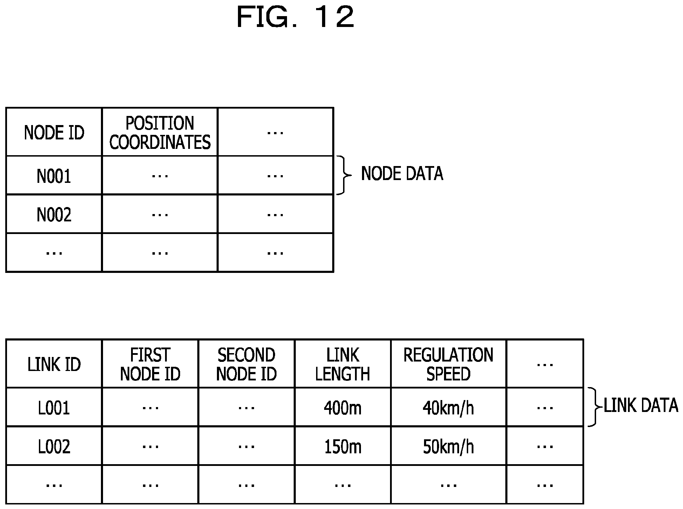

The map data storage unit 150 stores map data. The map data stored in the map data storage unit 150 will be described with reference to FIG. 12. FIG. 12 is a diagram illustrating exemplary map data.

As illustrated in FIG. 12, the map data includes node data indicating a node included in a road network on a map (for example, a corner of a road, a dead end of a road, an intersection, and the like), and link data indicating a link included in a road network (for example, a road and the like).

The node data includes, as data items, a node ID and position coordinates. In the data item "node ID", a node ID, which is identification information that identifies the node, is set. In the data item "position coordinates", latitude and longitude indicating the position of the node are set. Note that, besides these data items, the node data may include, for example, a data item in which the attribute of the node (for example, whether or not a traffic signal is installed at the node, and the like) is set, and the like.

The link data includes, as data items, a link ID, a first node ID, a second node ID, a link length, and a regulation speed. In the data item "link ID", a link ID, which is identification information that identifies the link, is set. In the data item "first node ID", a node ID indicating one end node constituting the link is set. In the data item "second node ID", a node ID indicating another end node constituting the link is set. In the data item "link length", the length (distance) of the link is set. In the data item "regulation speed", a legal regulation speed on a road represented by the link is set. Note that, besides these data items, the link data may include, for example, a data item in which the attribute of the link (for example, whether or not the road is one-way, the road width of a road represented by the link, and the like) is set, and the like.

The service candidate selection unit 103 can calculate the time during provision by, for example, making a search for a path from the departure place to the destination using the node data and the link data stored in the map data storage unit 150 (that is, the arrival time at the destination can be calculated). Similarly, the service candidate selection unit 103 can calculate the time before provision by making a search for a path from the current position of the provider 60 to the departure place, for example. Similarly, the service candidate selection unit 103 can calculate the time after provision by making a search for a path from the destination to the position of the home of the provider 60 (the position of the provider 60 before providing the moving service), for example.

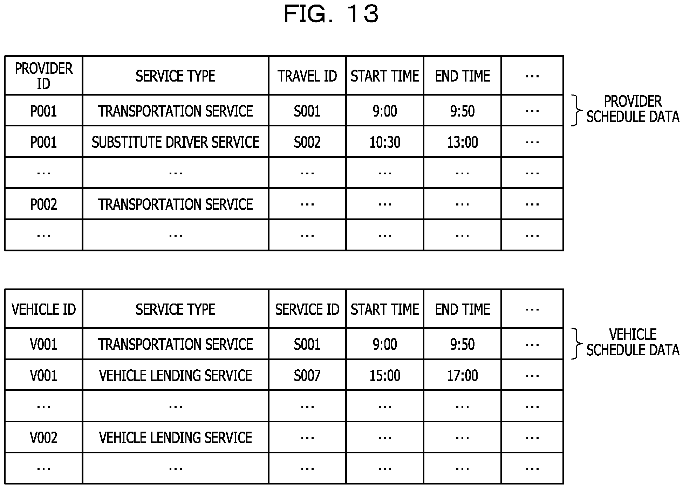

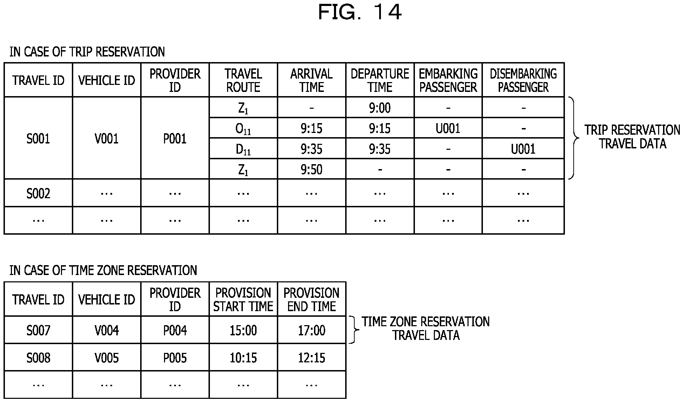

The schedule data storage unit 160 stores schedule data. The schedule data storage unit 160 will be described with reference to FIGS. 13 and 14. FIGS. 13 and 14 are diagrams illustrating exemplary schedule data.

As illustrated in FIG. 13, the schedule data includes a provider schedule indicating the schedule of the provider 60 and vehicle schedule data indicating the schedule of the vehicle 70. Furthermore, as illustrated in FIG. 14, the schedule data includes trip reservation travel data indicating the travel contents of the moving service reserved by the trip reservation, and time zone reservation travel data indicating the travel contents of the moving service reserved by the time zone reservation.

The provider schedule data includes, as data items, a provider ID, a service type, a travel ID, a start time, and an end time. In the data item "provider ID", the provider ID of a provider 60 that provides the moving service is set. In the data item "service type", the service type of a moving service provided by the provider 60 (that is, the transportation service or the substitute driver service) is set. In the data item "travel ID", a travel ID, which is identification information that identifies the trip reservation travel data or the time zone reservation travel data, is set. In the data item "start time", a start time of the moving service in consideration of the time before provision is set. In the data item "end time", an end time of the moving service in consideration of the time after provision is set.

The example illustrated in FIG. 13 contains provider schedule data in which a provider ID "P001", a service type "transportation service", a start time "9:00", and an end time "9:50" are set. This provider schedule data indicates that a time required for a provider 60 identified by the provider ID "P001" to provide the transportation service is "9:00 to 9:50".

Similarly, the example illustrated in FIG. 13 contains provider schedule data in which the provider ID "P001", a service type "substitute driver service", a start time "10:30", and an end time "13:00" are set. This provider schedule data indicates that a time required for the provider 60 identified by the provider ID "P001" to provide the substitute driver service is "10:30 to 13:00".

The vehicle schedule data includes, as data items, a vehicle ID, a service type, a travel ID, a start time, and an end time. In the data item "vehicle ID", the vehicle ID of a vehicle 70 lent for the vehicle lending service or the vehicle ID of a vehicle 70 used in the transportation service is set. In the data item "service type", the service type of a moving service using the vehicle 70 (that is, the transportation service or the vehicle lending service) is set. In the data item "travel ID", a travel ID, which is identification information that identifies the trip reservation travel data or the time zone reservation travel data, is set. In the data item "start time", a time at which the use of the relevant vehicle 70 is started by the provision of the moving service is set. In the data item "end time", a time at which the use of the relevant vehicle 70 ends by the end of the provision of the moving service is set.

The example illustrated in FIG. 13 contains vehicle schedule data in which a vehicle ID "V001", a service type "transportation service", a start time "9:00", and an end time "9:50" are set. This vehicle schedule data indicates that a vehicle 70 identified by the vehicle ID "V001" is used in the transportation service during "9:00 to 9:50".

Similarly, the example illustrated in FIG. 13 contains vehicle schedule data in which the vehicle ID "V001", a service type "vehicle lending service", a start time "15:00", and an end time "17:00" are set. This vehicle schedule data indicates that the vehicle 70 identified by the vehicle ID "V001" is lent by the vehicle lending service during "15:00 to 17:00".

The trip reservation travel data includes, as data items, a travel ID, a vehicle ID, a provider ID, a travel route, an arrival time, a departure time, an embarking passenger, and a disembarking passenger. In the data item "travel ID", a travel ID, which is identification information that identifies the trip reservation travel data, is set. The travel ID associates the trip reservation travel data with the provider schedule data or the vehicle schedule data.

In the data item "vehicle ID", the vehicle ID of a vehicle 70 used in the transportation service or the vehicle ID of a vehicle 70 lent for the vehicle lending service is set. Note that, when the service type of the provider schedule data associated by the travel ID is "substitute driver service", for example, a blank or null value is set in the data item "vehicle ID".

In the data item "provider ID", the provider ID of a provider 60 that provides the moving service is set. In the data item "travel route", a plurality of points indicating a path traveled by the provider 60 that provides the transportation service or the substitute driver service or the vehicle 70 lent by the vehicle lending service is set.

In the example illustrated in FIG. 14, assuming the position of the provider 60 that provides the transportation service as Z₁, the departure place designated by the user 50 as O₁₁, and the destination as D₁₁, Z₁, O₁₁, D₁₁, and Z₁ are set in the data item "travel route". This indicates that the provider 60 that provides the transportation service provides the transportation service by a path departing from the point Z₁ and returning to the point Z₁ by way of the departure place O₁₁ and the destination D₁₁.

In the data item "arrival time", the arrival time at each point set in the travel route is set. In the data item "departure time", the departure time from each point set in the travel route is set. In the data item "embarking passenger", the user ID of a user 50 who gets on the vehicle 70 at each point set in the travel route is set. In the data item "disembarking passenger", the user ID of a user 50 who gets off the vehicle 70 at each point set in the travel route is set.

In the example illustrated in FIG. 14, a departure time "9:00" is set for the first point Z₁. Furthermore, an arrival time "9:15", a departure time "9:15", and an embarking passenger "U001" are set for the departure place O₁₁. An arrival time "9:35", a departure time "9:35", and a disembarking passenger "U001" are set for the destination D₁₁. An arrival time "9:50" is set at the last point Z₁.

This indicates that the provider 60 that provides the transportation service departs from the point Z₁ at "9:00", arrives at the departure place O₁₁ at "9:15" to pick up a user 50 with the user ID "U001" at the departure place O₁₁, and then departs from the departure place O₁₁ at the time "9:15". This additionally indicates that the provider 60 arrives at the destination D₁₁ at the time "9:35" to drop the user 50 off at the destination D₁₁, departs from the destination D₁₁ at the time "9:35", and then returns to the point Z₁ at the time "9:50". Note that, in this case, "9:00 to 9:15" is the time before provision, "9:15 to 9:35" is the time during provision, and "9:35 to 9:50" is the time after provision.

The time zone reservation travel data includes, as data items, a travel ID, a vehicle ID, a provider ID, a provision start time, and a provision end time. In the data item "travel ID", a travel ID, which is identification information that identifies the time zone reservation travel data, is set. The travel ID associates the time zone reservation travel data with the provider schedule data or the vehicle schedule data.

In the data item "vehicle ID", the vehicle ID of a vehicle 70 used in the transportation service or the vehicle ID of a vehicle 70 lent for the vehicle lending service is set. Note that, when the service type of the provider schedule data associated by the travel ID is "substitute driver service", for example, a blank or null value is set in the data item "vehicle ID".

In the data item "provider ID", the provider ID of a provider 60 that provides the moving service is set. In the data item "provision start time", a time at which the provision of the moving service is started is set. In the data item "provision end time", a time at which the provision of the moving service ends is set.

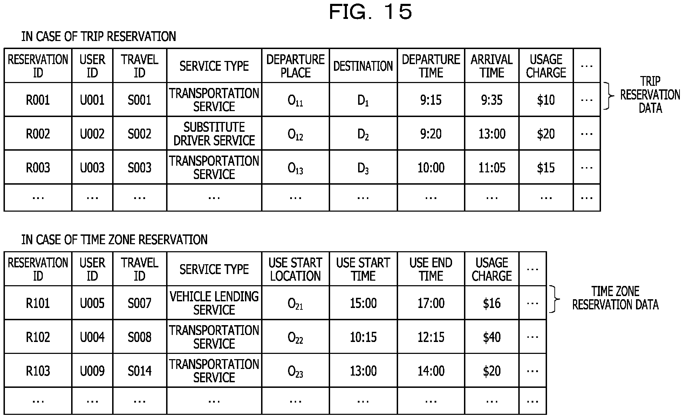

The reservation data storage unit 170 stores reservation data. The reservation data stored in the reservation data storage unit 170 will be described with reference to FIG. 15. FIG. 15 is a diagram illustrating exemplary reservation data.

As illustrated in FIG. 15, the reservation data includes trip reservation data indicating reservation by the trip reservation and time zone reservation data indicating reservation by the time zone reservation.

The trip reservation data includes, as data items, a reservation ID, a user ID, a travel ID, a service type, a departure place, a destination, a departure time, an arrival time, and a usage charge. In the data item "reservation ID", a reservation ID, which is identification information that identifies the trip reservation data, is set. In the data item "user ID", the user ID of a user 50 who uses the reserved moving service is set. In the data item "travel ID", the travel ID of the trip reservation travel data is set. The travel ID associates the trip reservation data with the trip reservation travel data.

In the data item "service type", the service type of the reserved moving service is set. In the data item "departure place", the departure place of the reserved moving service is set. In the data item "destination", the destination of the reserved moving service is set. In the data item "departure time", a departure time from the departure place in the reserved moving service is set. In the data item "arrival time", an arrival time at the destination in the reserved moving service is set. In the data item "usage charge", the usage charge of the reserved moving service is set.

The time zone reservation data includes, as data items, a reservation ID, a user ID, a travel ID, a service type, a use start location, a use start time, a use end time, and a usage charge. In the data item "reservation ID", a reservation ID, which is identification information that identifies the time zone reservation data, is set. In the data item "user ID", the user ID of a user 50 who uses the reserved moving service is set. In the data item "travel ID", the travel ID of the time zone reservation travel data is set. The travel ID associates the time zone reservation data with the time zone reservation travel data.

In the data item "service type", the service type of the reserved moving service is set. In the data item "use start location", the use start location of the reserved moving service is set. In the data item "use start time", the use start time of the reserved moving service is set. In the data item "use end time", the use end time of the reserved moving service is set. In the data item "usage charge", the usage charge of the reserved moving service is set.

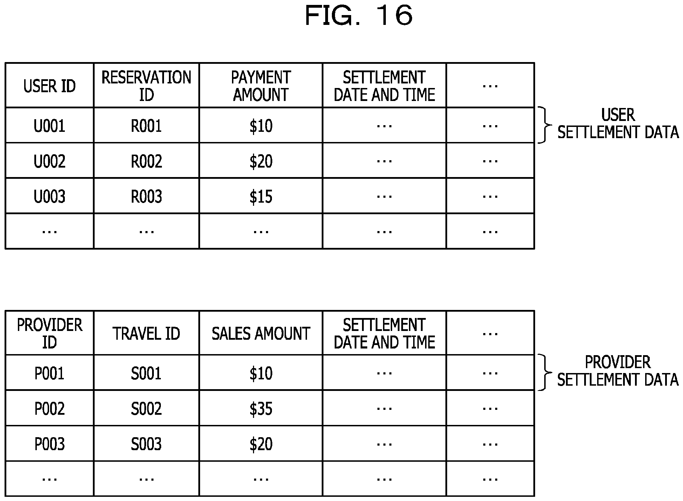

The settlement data storage unit 180 stores settlement data. The settlement data stored in the settlement data storage unit 180 will be described with reference to FIG. 16. FIG. 16 is a diagram illustrating exemplary settlement data.

As illustrated in FIG. 16, the settlement data includes user settlement data indicating the settlement contents of the user 50 and provider settlement data indicating the settlement contents of the provider 60.

The user settlement data includes, as data items, a user ID, a reservation ID, a payment amount, and a settlement date and time. In the data item "user ID", the user ID of a user 50 who has used the moving service is set. In the data item "reservation ID", the reservation ID of the trip reservation data or the time zone reservation data is set. The reservation ID associates the user settlement data with the trip reservation data or the time zone reservation data.

In the data item "payment amount", a usage amount settled by the user 50 is set. In the data item "settlement date and time", the date and time when the user 50 settled is set.

The provider settlement data includes, as data items, a provider ID, a travel ID, a sales amount, and a settlement date and time. In the data item "provider ID", the provider ID of a provider 60 that has provided the moving service is set. In the data item "travel ID", the travel ID of the trip reservation travel data or the time zone reservation travel data is set. The travel ID associates the provider settlement data with the trip reservation travel data or the time zone reservation travel data.

In the data item "sales amount", a usage amount settled by the user 50 for the moving service provided by the provider 60 is set. In the data item "settlement date and time", the date and time when the user 50 settled is set.

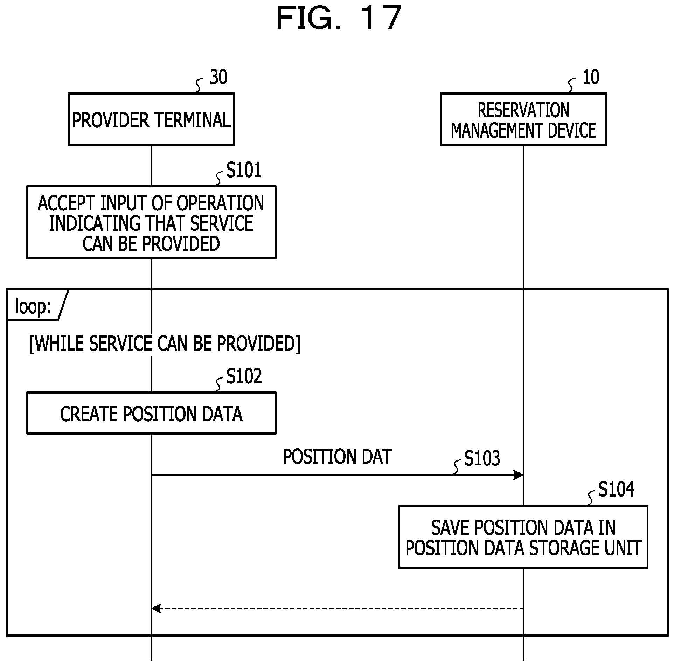

Next, details of the process of the moving service reservation system 1 according to the present embodiment will be described. First, a process in which the reservation management device 10 acquires position data indicating the current position of the provider 60 (that is, position data indicating the current position of the provider terminal 30) will be described with reference to FIG. 17. FIG. 17 is a sequence diagram illustrating an exemplary process of acquiring position data on the provider terminal 30 according to the first embodiment.

First, the operation acceptance unit 303 of the provider terminal 30 accepts an input of an operation indicating that a service can be provided (step S101). For example, the provider 60 can perform this operation by pressing a button or the like indicating the start of service provision on a predetermined screen for starting to provide the moving service displayed by the display control unit 302.

The following processes in steps S102 to S104 are repeatedly executed at predetermined time intervals, for example, until the operation acceptance unit 303 accepts an operation for ending a state in which the service can be provided.

The position measurement unit 304 of the provider terminal 30 measures the current position using the GPS receiver 39, and creates provider position data indicating the measured current position (step S102). Note that, as described with reference to FIG. 11, the provider position data includes the provider ID of the provider 60, the position coordinates indicating the current position measured by the GPS receiver 39, and the acquisition time indicating a time when the measurement was performed.

Next, the communication unit 301 of the provider terminal 30 transmits the provider position data created by the position measurement unit 304 to the reservation management device 10 (step S103).

Upon receiving the provider position data through the communication unit 101, the position management unit 102 of the reservation management device 10 saves the provider position data in the position data storage unit 140 (step S104). Note that, when provider position data set with the same provider ID is stored in the position data storage unit 140, the position management unit 102 may overwrite the stored provider position data with the provider position data received by the communication unit 101.

With the above processes, the provider position data indicating the current position of the provider 60 is stored in the position data storage unit 140 of the reservation management device 10 at predetermined time intervals.

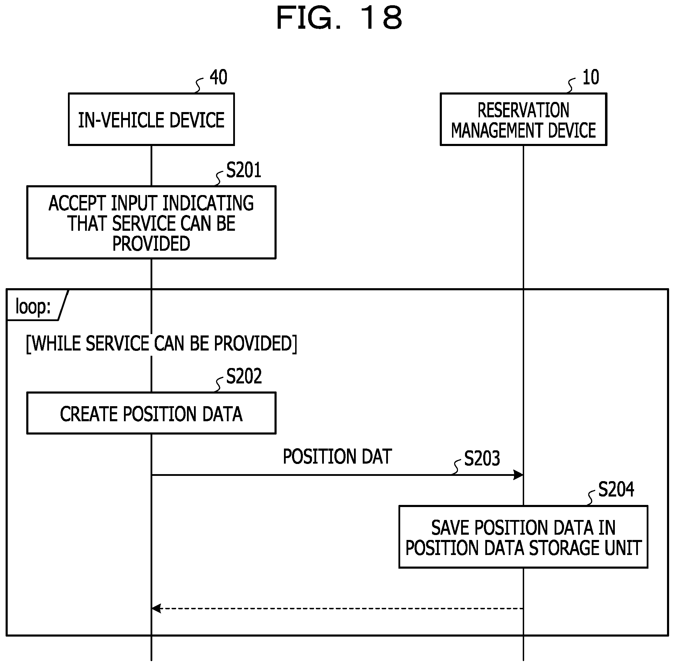

Next, a process in which the reservation management device 10 acquires position data indicating the current position of the vehicle 70 (that is, position data indicating the current position of the in-vehicle device 40) will be described with reference to FIG. 18. FIG. 18 is a sequence diagram illustrating an exemplary process of acquiring position data on the in-vehicle device 40 according to the first embodiment.

First, the operation acceptance unit 403 of the in-vehicle device 40 accepts an input of an operation indicating that a service can be provided (step S201). For example, the provider 60 can perform this operation by pressing a button or the like indicating the start of service provision on a predetermined screen for starting to provide the moving service displayed by the display control unit 402.

The following processes in steps S202 to S204 are repeatedly executed at predetermined time intervals, for example, until the operation acceptance unit 403 accepts an operation for ending a state in which the service can be provided.

The position measurement unit 404 of the in-vehicle device 40 measures the current position using the GPS receiver 49, and creates vehicle position data indicating the measured current position (step S202). Note that, as described with reference to FIG. 11, the vehicle position data includes the vehicle ID of the vehicle 70, the position coordinates indicating the current position measured by the GPS receiver 49, and the acquisition time indicating a time when the measurement was performed.

Next, the communication unit 401 of the in-vehicle device 40 transmits the vehicle position data created by the position measurement unit 404 to the reservation management device 10 (step S203).

Upon receiving the vehicle position data through the communication unit 101, the position management unit 102 of the reservation management device 10 saves the vehicle position data in the position data storage unit 140 (step S204). Note that, when vehicle position data set with the same vehicle ID is stored in the position data storage unit 140, the position management unit 102 may overwrite the stored vehicle position data with the vehicle position data received by the communication unit 101.

With the above processes, the vehicle position data indicating the current position of the vehicle 70 is stored in the position data storage unit 140 of the reservation management device 10 at predetermined time intervals.

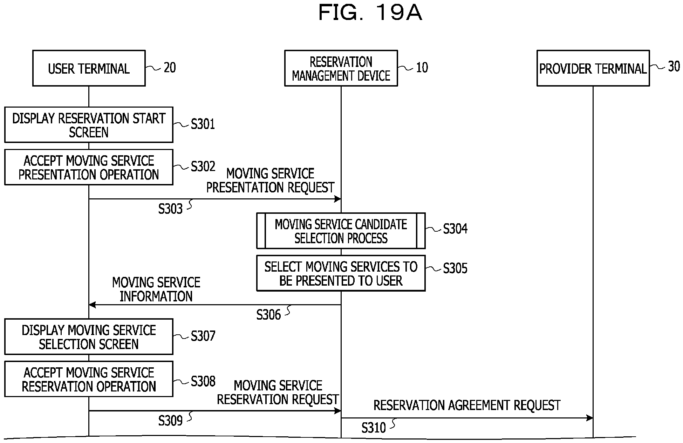

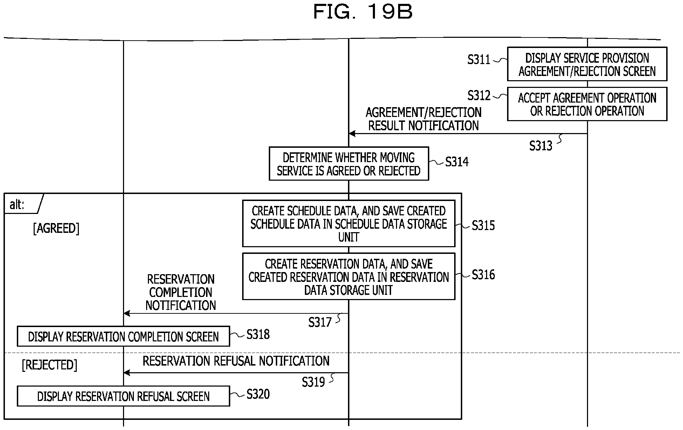

Next, a process in which the user 50 reserves a moving service provided by the provider 60 using the user terminal 20 will be described with reference to FIGs. 19A and 19B. FIGs. 19A and 19B are a sequence diagram illustrating an exemplary service reservation process according to the first embodiment.

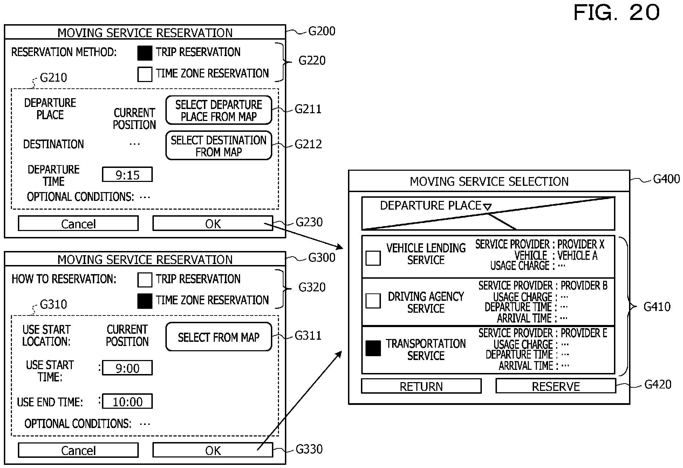

First, the display control unit 202 of the user terminal 20 displays a reservation start screen G200 or a reservation start screen G300 illustrated in FIG. 20, for example (step S301).

The reservation start screen G200 illustrated in FIG. 20 is a screen for reserving a moving service by the trip reservation. Meanwhile, the reservation start screen G300 illustrated in FIG. 20 is a screen for reserving a moving service by the time zone reservation.

The reservation start screen G200 illustrated in FIG. 20 includes a user designation field G210 for designating conditions relating to the trip reservation (hereinafter, referred to as "trip reservation conditions"). The user 50 can designate the departure place, the destination, the departure time, and optional conditions as trip reservation conditions in the user designation field G210. At this time, the current position of the user 50 is designated as the departure place. The current position of the user 50 can be measured by the position measurement unit 204 of the user terminal 20. Note that the user 50 can also designate an arbitrary departure place on a map displayed by the display control unit 202, as the departure place, by pressing a "select departure place from map" button G211.

Furthermore, the user 50 designates an arbitrary destination. At this time, the user 50 can also designate an arbitrary departure place on a map displayed by the display control unit 202, by pressing a "select destination from map" button G212.

Moreover, the user 50 can designate diverse conditions as optional conditions. For example, "driver is same gender" can be designated as an optional condition relating to the transportation service and the substitute driver service. For example, as optional conditions relating to the vehicle lending service, "vehicle type", "model year", "capacity of passengers", "wheelchair accessibility", "permission/restriction of smoking", and the like of the vehicle 70 to be lent can be designated.

Note that the user 50 can switch the display to the reservation start screen G300 illustrated in FIG. 20 by selecting "time zone reservation" in a reservation method switching field G220 on the reservation start screen G200 illustrated in FIG. 20.

The reservation start screen G300 illustrated in FIG. 20 includes a user designation field G310 for designating conditions relating to the time zone reservation (hereinafter, referred to as "time zone reservation conditions"). The user 50 can designate the use start location, the use start time, the use end time, and optional conditions as time zone reservation conditions in the user designation field G301. At this time, the current position of the user 50 is designated as the use start location. The current position of the user 50 can be measured by the position measurement unit 204 of the user terminal 20. Note that the user 50 can also designate an arbitrary use start location on a map displayed by the display control unit 202, as the use start location, by pressing a "select from map" button G311.

Furthermore, the user 50 can designate optional conditions in the user designation field G310 as in the user designation field G210.

Note that the user 50 can switch the display to the reservation start screen G200 illustrated in FIG. 20 by selecting "trip reservation" in a reservation method switching field G320 on the reservation start screen G300 illustrated in FIG. 20.

Next, the operation acceptance unit 203 of the user terminal 20 accepts a moving service presentation operation (step S302). The user 50 can perform the moving service presentation operation by pressing an OK button G230 after designating conditions relating to the trip reservation in the user designation field G210 on the reservation start screen G200 illustrated in FIG. 20. Alternatively, the user 50 can perform the moving service presentation operation by pressing an OK button G330 after designating conditions relating to the time zone reservation in the user designation field G310 on the reservation start screen G300 illustrated in FIG. 20.

Once the operation acceptance unit 203 accepts the moving service presentation operation, the communication unit 201 of the user terminal 20 transmits a moving service presentation request to the reservation management device 10 (step S303). The moving service presentation request includes, for example, the user ID of the user 50 and the trip reservation conditions or the time zone reservation conditions.

Upon accepting the moving service presentation request through the communication unit 101, the service candidate selection unit 103 of the reservation management device 10 performs a moving service candidate selection process (step S304). A candidate for a moving service to be presented to the user 50 is selected by the moving service candidate selection process. Note that the details of the moving service candidate selection process will be described later.

Next, the presentation service selection unit 105 of the reservation management device 10 selects a plurality of moving services to be presented to the user 50 from among the moving service candidates selected by the service candidate selection unit 103 (step S305). In other words, the presentation service selection unit 105 selects moving services targeted to be displayed on the user terminal 20 from among the moving service candidates selected by the service candidate selection unit 103.

For example, the presentation service selection unit 105 selects a predetermined number (for example, one) of moving services in the order from the closest one to the departure place or the use start location in each service type. With this configuration, in the trip reservation, a transportation service provided by a provider 60 closest to the departure place, a substitute driver service provided by a provider 60 closest to the departure place, and a vehicle lending service that lends a vehicle 70 closest to the departure place are selected. Similarly, in the time zone reservation, a transportation service provided by a provider 60 closest to the use start location, a substitute driver service provided by a provider 60 closest to the use start location, and a vehicle lending service that lends a vehicle 70 closest to the use start location are selected.

Note that, in the above, a case where the moving service to be presented to the user 50 is selected in each of the three service types, namely, the transportation service, the substitute driver service, and the vehicle lending service; however, the present invention is not limited to this. For example, the presentation service selection unit 105 may select a moving service to be presented to the user 50 in each of two service types.

Furthermore, the presentation service selection unit 105 may select, for example, a moving service with the lowest usage charge for each service type. With this configuration, a transportation service with the lowest usage charge, a substitute driver service with the lowest usage charge, and a vehicle lending service with the lowest usage charge are selected.

Next, the communication unit 101 of the reservation management device 10 transmits moving service information indicating each of the plurality of moving services selected by the presentation service selection unit 105 to the user terminal 20 (step S306). The moving service information includes, for example, the service type of the moving service, information regarding the provider 60 that provides the moving service (for example, the provider ID, name, and the like), the time required to provide the moving service (the time before provision, time during provision, and time after provision), and the usage charge of the moving service.

Note that, besides these items, for example, in the case of the trip reservation, the moving service information includes the departure place, destination, departure time, arrival time, path information indicating the travel route, and the like. Meanwhile, for example, in the case of the time zone reservation, the use start location, use start time, use end time, and the like are included.

Upon receiving a plurality of pieces of moving service information through the communication unit 201, the display control unit 202 of the user terminal 20 displays, for example, a moving service selection screen G400 illustrated in FIG. 20 based on this plurality of pieces of moving service information (step S307).

The moving service selection screen G400 illustrated in FIG. 20 includes a moving service list G410 in which a plurality of moving services available to (that is, that can be reserved by) the user 50 are displayed in a list. In the moving service list G410, for example, the usage charge and the like of each moving service are displayed. With this configuration, the user 50 can easily compare a plurality of moving services having different service types.

The operation acceptance unit 203 of the user terminal 20 accepts a moving service reservation operation (step S308). The user 50 can perform the moving service reservation operation by pressing a reservation button G420 after selecting a moving service to be used (that is, a moving service for which a reservation is requested) from the moving service list G410, for example.

Once the operation acceptance unit 203 accepts the moving service reservation operation, the communication unit 201 of the user terminal 20 transmits a moving service reservation request to the reservation management device 10 (step S309). The moving service reservation request includes, for example, the user ID of the user 50 and moving service information indicating a moving service selected by the user 50.

Upon receiving the moving service reservation request through the communication unit 101, the service reservation unit 106 of the reservation management device 10 transmits a reservation agreement request to the relevant provider terminal 30 (step S310). That is, the service reservation unit 106 transmits the reservation agreement request to the provider terminal 30 used by a provider 60 having a provider ID included in the moving service reservation request. The reservation agreement request includes, for example, the user ID of the user 50 who has requested the reservation of the moving service, and moving service information indicating this moving service.

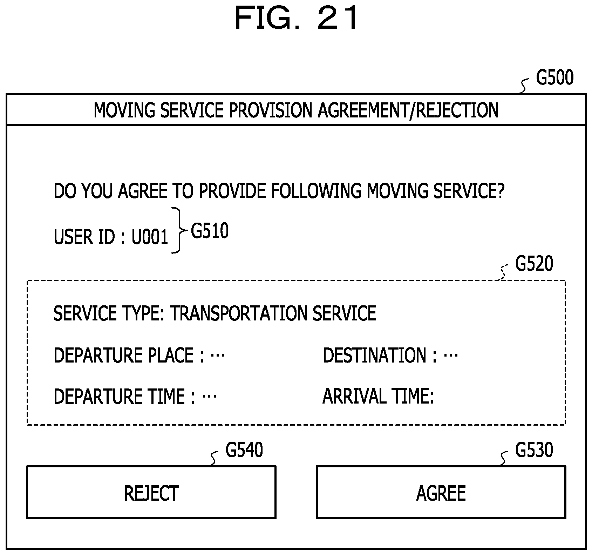

Upon receiving the reservation agreement request through the communication unit 301, the display control unit 302 of the provider terminal 30 displays, for example, a service provision agreement/rejection screen G500 illustrated in FIG. 21 (step S311).

The service provision agreement/rejection screen G500 illustrated in FIG. 21 includes a user display field G510 in which the user ID of the user 50 who has requested the reservation is displayed, and a moving service content display field G520 in which the contents of the moving service for which the reservation is requested is displayed.

The operation acceptance unit 303 of the provider terminal 30 accepts an agreement operation indicating that the provision of the moving service for which the reservation is requested is agreed, or a rejection operation indicating that the provision of the moving service for which the reservation is requested is rejected (step S312). The provider 60 can perform the agreement operation by pressing an agreement button G530 included in the service provision agreement/rejection screen G500 illustrated in FIG. 21, for example. Meanwhile, the provider 60 can perform the rejection operation by pressing a rejection button G540 included in the service provision agreement/rejection screen G500 illustrated in FIG. 21, for example.

Once the operation acceptance unit 303 accepts the agreement operation or the rejection operation, the communication unit 301 of the provider terminal 30 transmits an agreement/rejection result notification to the reservation management device 10 (step S313). When the operation acceptance unit 303 accepts the agreement operation, the agreement/rejection result notification includes information indicating that the provision of the moving service is agreed. On the other hand, when the operation acceptance unit 303 accepts the rejection operation, the agreement/rejection result notification includes information indicating that the provision of the moving service is rejected.

Upon receiving the agreement/rejection result notification through the communication unit 101, the service reservation unit 106 of the reservation management device 10 determines which of the information indicating that the provision of the moving service is agreed and the information indicating that the provision of the moving service is rejected is included in the received agreement/rejection result notification (step S314).

When the information indicating that the provision of the moving service is agreed is included in the received agreement/rejection result notification, the following processes in steps S315 to S318 are executed. On the other hand, when the information indicating that the provision of the moving service is rejected is included in the received agreement/rejection result notification, the following processes in steps S319 and S320 are executed.

When the information indicating that the provision of the moving service is agreed is included in the received agreement/rejection result notification, the service reservation unit 106 of the reservation management device 10 creates schedule data, and saves the created schedule data in the schedule data storage unit 160 (step S315). The service reservation unit 106 creates the schedule data based on the user ID of the user 50, moving service information indicating the moving service agreed by the provider 60, and the reservation method by which the user 50 made the reservation.

For example, in the case of the service type "vehicle lending service" and the reservation method "trip reservation", the service reservation unit 106 creates vehicle schedule data in which the vehicle ID of the vehicle 70 to be lent for the vehicle lending service is set, and trip reservation travel data associated with the created vehicle schedule data.

Furthermore, for example, in the case of the service type "vehicle lending service" and the reservation method "time zone reservation", the service reservation unit 106 creates vehicle schedule data in which the vehicle ID of the vehicle 70 to be lent for the vehicle lending service is set, and time zone reservation travel data associated with the created vehicle schedule data.

Similarly, for example, in the case of the service type "substitute driver service" and the reservation method "trip reservation", the service reservation unit 106 creates provider schedule data in which the provider ID of the provider 60 that provides the substitute driver service is set, and trip reservation travel data associated with the created provider schedule data.

Similarly, for example, in the case of the service type "substitute driver service" and the reservation method "time zone reservation", the service reservation unit 106 creates provider schedule data in which the provider ID of the provider 60 that provides the substitute driver service is set, and time zone reservation travel data associated with the created provider schedule data.

Similarly, for example, in the case of the service type "transportation service" and the reservation method "trip reservation", the service reservation unit 106 creates provider schedule data in which the provider ID of the provider 60 that provides the transportation service is set, vehicle schedule data in which the vehicle ID of the vehicle 70 to be used for the transportation service is set, and trip reservation travel data associated with the created provider schedule data and vehicle schedule data.

Similarly, for example, in the case of the service type "transportation service" and the reservation method "time zone reservation", the service reservation unit 106 creates provider schedule data in which the provider ID of the provider 60 that provides the transportation service is set, vehicle schedule data in which the vehicle ID of the vehicle 70 to be used for the transportation service is set, and time zone reservation travel data associated with the created provider schedule data and vehicle schedule data.

Next, the service reservation unit 106 of the reservation management device 10 creates reservation data, and saves the created reservation data in the reservation data storage unit 170 (step S316). At this time, when the reservation method is "trip reservation", the service reservation unit 106 creates trip reservation data. Meanwhile, when the reservation method is "time zone reservation", the service reservation unit 106 creates time zone reservation data. Note that the usage charge included in the reservation data is calculated by a "usage charge computation process" described later.

Next, the communication unit 101 of the reservation management device 10 transmits a reservation completion notification to the user terminal 20 (step S317). The reservation completion notification includes, for example, the reservation ID of the reservation data created in above step S316.

Upon receiving the reservation completion notification through the communication unit 201, the display control unit 202 of the user terminal 20 displays a reservation completion screen indicating that the reservation has been completed (step S318). With this step, the user 50 can know that the reservation of the moving service has been completed.

On the other hand, when the information indicating that the provision of the moving service is rejected is included in the received agreement/rejection result notification, the communication unit 101 of the reservation management device 10 transmits a reservation refusal notification to the user terminal 20 (step S319).

Upon receiving the reservation refusal notification through the communication unit 201, the display control unit 202 of the user terminal 20 displays a reservation refusal screen indicating that the reservation could not be made (step S320). With this step, the user 50 can know that the reservation of the moving service could not be made.

As described above, in the moving service reservation system 1 according to the present embodiment, the user 50 can make a reservation for a desired moving service from a plurality of moving services, using the user terminal 20. Besides, in the moving service reservation system 1 according to the present embodiment, a plurality of moving services having different service types is presented to the user 50. In other words, the moving service reservation system 1 according to the present embodiment presents a miscellaneous variety of moving services to the user 50. For this reason, the user 50 is allowed to select a moving service to be reserved after comparing the usage charge, convenience, and the like according to, for example, whether or not the user 50 owns the vehicle, whether or not the user 50 has the driving ability, or the like.

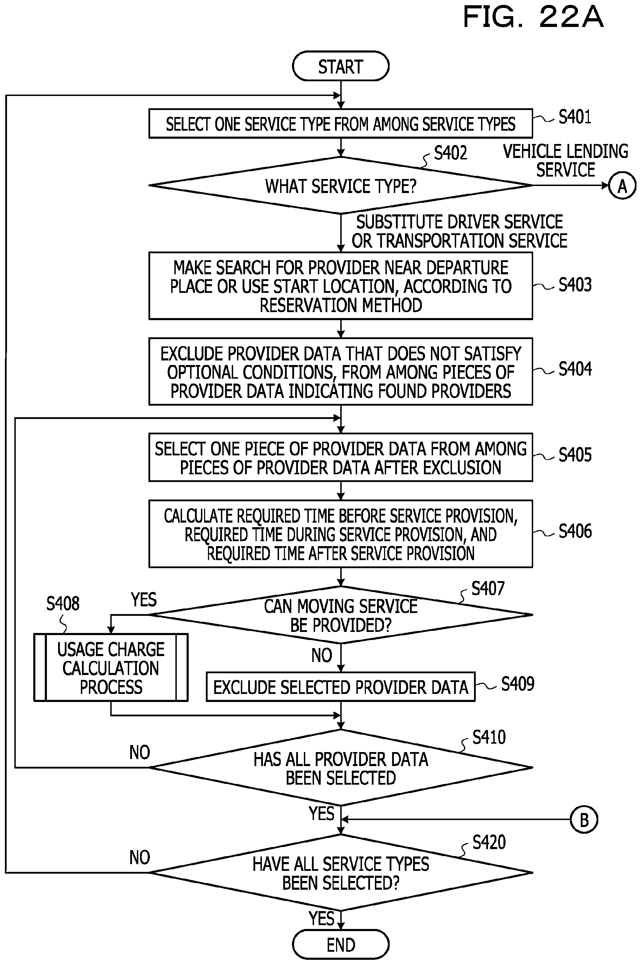

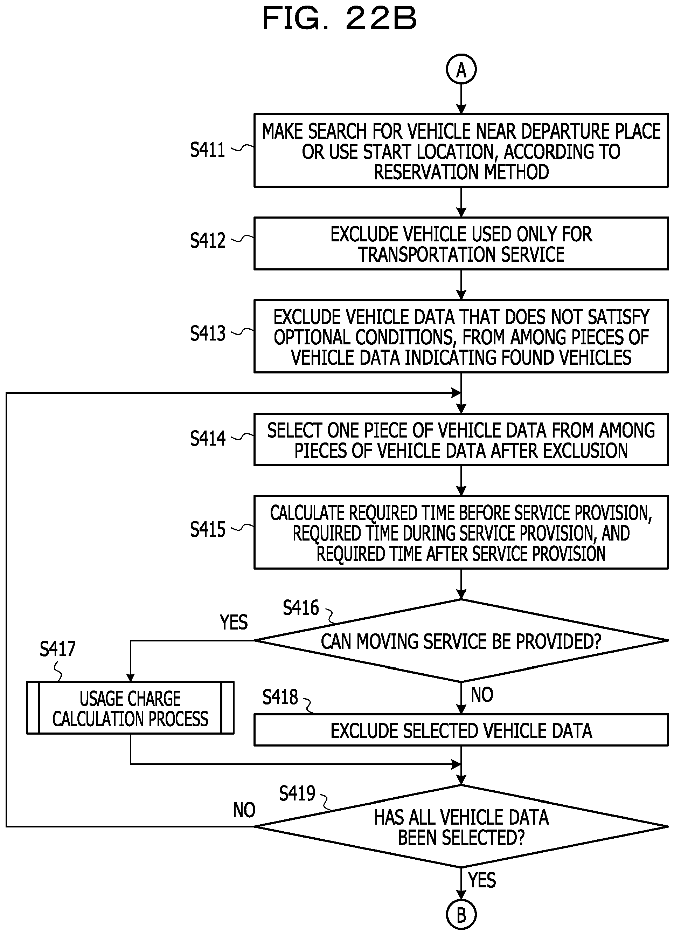

Next, details of the moving service candidate selection process (the process in step S304 in FIGs. 19A and 19B) according to the present embodiment will be described with reference to FIGs. 22A and 22B. FIGs. 22A and 22B are a flowchart illustrating an exemplary moving service candidate selection process according to the first embodiment.

First, the service candidate selection unit 103 selects one service type from among the service types (step S401). That is, the service candidate selection unit 103 selects one service type from among "vehicle lending service", "substitute driver service", and "transportation service".

Next, the service candidate selection unit 103 determines which of "vehicle lending service", "substitute driver service", and "transportation service" is the selected service type (step S402).

When it is determined in step S402 that the selected service type is "substitute driver service" or "transportation service", the service candidate selection unit 103 make a search for a provider 60 located within a predetermined range from the departure place or the use start location, according to the reservation method (step S403). That is, when the reservation method is "trip reservation", the service candidate selection unit 103 refers to the provider data storage unit 120 and the position data storage unit 140 to make a search for a provider 60 that can provide a moving service of the selected service type, and is located within a predetermined range from the departure place included in the trip reservation conditions. Meanwhile, when the reservation method is "time zone reservation", the service candidate selection unit 103 refers to the provider data storage unit 120 and the position data storage unit 140 to make a search for a provider 60 that can provide a moving service of the selected service type, and is located within a predetermined range from the use start location included in the time zone reservation conditions.

Note that the service candidate selection unit 103 can simply determine that the reservation method is "trip reservation" when the moving service presentation request includes the trip reservation conditions, for example. Similarly, the service candidate selection unit 103 can simply determine that the reservation method is "time zone reservation" when the moving service presentation request includes the time zone reservation conditions, for example.

Next, the service candidate selection unit 103 refers to the user data storage unit 110, the provider data storage unit 120, and the vehicle data storage unit 130 to exclude provider data that does not satisfy the optional conditions, from among pieces of the provider data indicating the providers 60 found in above step S403 (step S404).

For example, when "driver is same gender" is designated as an optional condition, the service candidate selection unit 103 first refers to the user data storage unit 110 to specify the gender of the user 50. Then, the service candidate selection unit 103 refers to the provider data storage unit 120 to exclude provider data indicating a provider 60 having a gender different from the gender of the user 50, from among pieces of the provider data indicating the providers 60 found in above step S403.

Furthermore, for example, when "smoking is permitted" is designated as an optional condition, the service selection unit 103 refers to the vehicle data storage unit 130 to exclude provider data including the vehicle ID indicating a vehicle in which smoking is restricted, from among pieces of the provider data indicating the providers 60 found in above step S403. Furthermore, for example, when "wheelchair accessible" is designated as an optional condition, the service selection unit 103 refers to the vehicle data storage unit 130 to exclude provider data including the vehicle ID indicating a vehicle not accessible for a wheelchair, from among pieces of the provider data indicating the providers 60 found in above step S403.

Next, the service candidate selection unit 103 selects one piece of the provider data from among pieces of the provider data after the exclusion (step S405).

Next, the service candidate selection unit 103 calculates the time before provision, the time during provision, and the time after provision of a provider 60 indicated by the provider data selected in above step S405 (step S406). The time before provision, the time during provision, and the time after provision are calculated, for example, as in following (1) to (3).

### (1) Time Before Provision

When the reservation method is "trip reservation", the service candidate selection unit 103 refers to the map data storage unit 150 to make a search for a path from the position of the provider 60 indicated by the selected provider data to the departure place included in the trip reservation conditions. Then, the service candidate selection unit 103 defines the moving time from the position of the provider 60 to the departure place as the time before provision.

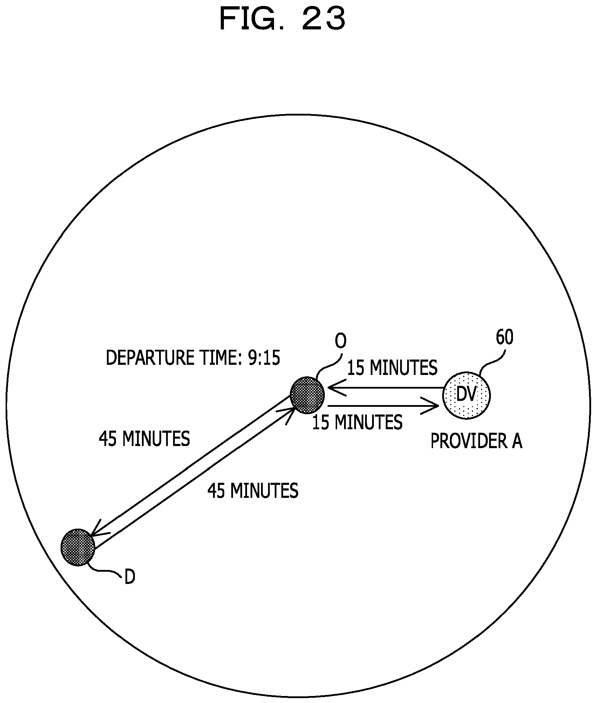

For example, as illustrated in FIG. 23, it is assumed that, when the reservation method is "trip reservation" and the departure time from a departure place O is "9:15", provider data indicating a provider 60 (provider A) that can provide the transportation service is selected. At this time, when a time required to move from the position of the provider 60 to the departure place O is "15 minutes", the time before provision is given as "9:00 to 9:15".

Meanwhile, when the reservation method is "time zone reservation", the service candidate selection unit 103 refers to the map data storage unit 150 to make a search for a path from the position of the provider 60 indicated by the selected provider data to the use start location included in the time zone reservation conditions. Then, the service candidate selection unit 103 defines the moving time from the position of the provider 60 to the use start location as the time before provision.

Note that the moving time from the position of the provider 60 to the departure place can employ, for example, the moving time by car when the service type is "transportation service", and can employ the moving time on foot when the service type is "substitute driver service".

Furthermore, when the service type is "transportation service", there is a case where the position of the provider 60 that provides the transportation service is away from the position of the vehicle 70 used by the provider 60 for the transportation service (for example, when the vehicle 70 is parked in a parking lot located at a place away from home, and the like). In such a case, the service candidate selection unit 103 may add a time for the provider 60 to move to the position of the vehicle 70 to the time before provision of the provider 60. In other words, the service candidate selection unit 103 may calculate the time before provision of the provider 60 in consideration of a time until the provider 60 reaches the position of the vehicle 70.

### (2) Time During Provision

When the reservation method is "trip reservation", the service candidate selection unit 103 refers to the map data storage unit 150 to make a search for a path from the departure place to the destination included in the trip reservation conditions. Then, the service candidate selection unit 103 defines the moving time from the departure place to the destination as the time during provision.

For example, as illustrated in FIG. 23, when a time required to move from the departure place O to a destination D is "45 minutes", the time during provision is given as "9:15 to 10:00".

Meanwhile, when the reservation method is "time zone reservation", the service candidate selection unit 103 defines a time from the use start time to the use end time as the time during provision, on the basis of the use start time and the use end time included in the time zone reservation conditions.

### (3) Time After Provision

When the reservation method is "trip reservation", the service candidate selection unit 103 refers to the map data storage unit 150 to make a search for a path from the destination included in the trip reservation conditions to the position of the provider 60 indicated by the selected provider data. Then, the service candidate selection unit 103 defines the moving time from the destination to the provider 60 as the time after provision.

For example, as illustrated in FIG. 23, a time required to move from the departure place D to the departure place O is "45 minutes", and a time required to move from the departure place O to the provider 60 (provider A) is "15 minutes", the time before provision is given as "10:00 to 11:00".

Meanwhile, when the reservation method is "time zone reservation", the service candidate selection unit 103 refers to the map data storage unit 150 to make a search for a path from the use start location included in the time zone reservation conditions to the position of the provider 60 indicated by the selected provider data. Then, the service candidate selection unit 103 defines the moving time from the use start location to the position of the provider 60 as the time after provision.

Next, the service candidate selection unit 103 refers to the schedule data storage unit 160 to determine whether or not the provider 60 indicated by the selected provider data can provide the moving service, based on the calculated time before provision, time during provision, and time after provision (step S407).

That is, the service candidate selection unit 103 determines whether or not the provider 60 will be in time for the departure time (or the use start time), based on the time before provision. For example, when the time before provision is "9:00 to 9:30", and the departure time (or the use start time) is "9:15", the service candidate selection unit 103 determines that the provider 60 will not be in time for the departure time (or the use start time). In this case, the service candidate selection unit 103 determines that the provider 60 cannot provide the moving service.

Furthermore, the service candidate selection unit 103 refers to the schedule data storage unit 160 to determine whether or not there is provider schedule data in which the provider ID of the provider 60 is set in a time zone from the time before provision to the time after provision. When there is such provider schedule data, the service candidate selection unit 103 determines that the provider 60 cannot provide the moving service.

Moreover, when the service type selected in above step S401 is "transportation service", the service candidate selection unit 103 also determines whether or not there is vehicle schedule data in which the vehicle ID of the vehicle 70 used by the provider 60 is set in a time zone from the time before provision to the time after provision. When there is such vehicle schedule data, the service candidate selection unit 103 determines that the provider cannot provide the moving service.

Note that the moving service provided by the provider 60 determined to be able to provide the moving service in step S407 is regarded as a moving service candidate.

When it is determined in step S407 that the moving service can be provided, the charge computation unit 104 calculates the usage charge of the moving service candidate provided by the provider 60 indicated by the provider data selected in above step S405 (step S408). Note that the details of the usage charge calculation process will be described later.

On the other hand, when it is determined in step S407 that the moving service cannot be provided, the service candidate selection unit 103 excludes the provider data selected in above step S405 (step S409).

Subsequent to step S408 or step S409, the service candidate selection unit 103 determines whether or not all the provider data has been selected in above step S405 (step S410).

When it is determined in step S410 that there is unselected provider data, the service candidate selection unit 103 returns to step S405. In consequence, the processes in steps S405 to S410 are executed on all the provider data after the exclusion in above step S404.

On the other hand, when it is determined in step S410 that all the provider data has been selected, the service candidate selection unit 103 proceeds to the process in step S420.

When it is determined in step S402 that the selected service type is "vehicle lending service", the service candidate selection unit 103 make a search for a vehicle 70 present within a predetermined range from the departure place or the use start location, according to the reservation method (step S411). That is, when the reservation method is "trip reservation", the service candidate selection unit 103 refers to the vehicle data storage unit 130 and the position data storage unit 140 to make a search for a vehicle 70 present within a predetermined range from the departure place included in the trip reservation conditions. Meanwhile, when the reservation method is "time zone reservation", the service candidate selection unit 103 refers to the vehicle data storage unit 130 and the position data storage unit 140 to make a search for a vehicle 70 present within a predetermined range from the use start location included in the time zone reservation conditions.

Next, the service candidate selection unit 103 excludes vehicle data indicating a vehicle 70 used only for the transportation service from among the vehicles 70 found in above step S411 (step S412). That is, the service candidate selection unit 103 refers to the provider data storage unit 120 and the vehicle data storage unit 130 to exclude vehicle data associated with the provider data indicating a provider 60 that cannot provide the vehicle lending service, from among pieces of the vehicle data indicating the found vehicles 70.

Next, the service candidate selection unit 103 refers to the vehicle data storage unit 130 to exclude vehicle data that does not satisfy the optional conditions, from among pieces of the vehicle data indicating the vehicles 70 after the exclusion in above step S412 (step S413).

For example, when "vehicle type", "model year", "capacity of passengers", "wheelchair accessibility", and "permission/restriction of smoking" are designated as optional conditions, the service candidate selection unit 103 refers to the vehicle data storage unit 130 to exclude vehicle data indicating a vehicle 70 that does not satisfy the conditions.

Next, the service candidate selection unit 103 selects one piece of the vehicle data from among pieces of the vehicle data after the exclusion (step S414).

Next, the service candidate selection unit 103 calculates the time before provision, the time during provision, and the time after provision of a vehicle 70 indicated by the vehicle data selected in above step S414 (step S415). The service candidate selection unit 103 calculates the time before provision and the time after provision as "0". Furthermore, the service candidate selection unit 103 calculates the time during provision by a method similar to above step S406.

The time before provision is defined as "0" because, in the vehicle lending service, the user 50 moves to the position of the vehicle 70, for example. Furthermore, the time after provision is defined as "0" because, in the vehicle lending service, the user 50 returns the vehicle 70 to the original position, for example. However, the service candidate selection unit 103 may define the moving time from the current position of the user 50 to the position of the vehicle 70 as the time before provision, for example. Similarly, the service candidate selection unit 103 may define the moving time from the position where the vehicle 70 is returned to the current position of the user 50 as the time after provision.

Next, the service candidate selection unit 103 refers to the schedule data storage unit 160 to determine whether or not the vehicle lending service can be provided with the vehicle 70 indicated by the selected vehicle data, based on the calculated time before provision, time during provision, and time after provision (step S416). In other words, the service candidate selection unit 103 refers to the schedule data storage unit 160 to determine whether or not the vehicle 70 can be lent by the vehicle lending service.

That is, the service candidate selection unit 103 refers to the schedule data storage unit 160 to determine whether or not there is vehicle schedule data in which the vehicle ID of the vehicle 70 is set in a time zone from the time before provision to the time after provision. When there is such vehicle schedule data, the service candidate selection unit 103 determines that the vehicle lending service cannot be provided with the vehicle 70 (that is, the vehicle 70 cannot be lent).

Furthermore, the service candidate selection unit 103 may determine whether or not the user 50 will be in time for the departure time (or the use start time), in consideration of the moving time from the current position of the user 50 to the vehicle 70. For example, when the moving time from the current position of the user 50 to the vehicle 70 is "30 minutes", the current time is "9:00", and the departure time (or the use start time) is "9:15", the service candidate selection unit 103 determines that the provider 60 will not be in time for the departure time (or the use start time). In this case, the service candidate selection unit 103 determines that the vehicle lending service cannot be provided with the vehicle 70.

Note that the vehicle lending service that lends the vehicle 70 determined to be lendable in step S416 is regarded as a moving service candidate.

When it is determined in step S416 that the vehicle lending service can be provided, the charge computation unit 104 calculates the usage charge of the moving service candidate that lends the vehicle 70 indicated by the vehicle data selected in above step S414 (step S417). Note that the details of the usage charge calculation process will be described later.

On the other hand, when it is determined in step S407 that the vehicle lending service cannot be provided, the service candidate selection unit 103 excludes the vehicle data selected in above step S414 (step S418).

Subsequent to step S417 or step S418, the service candidate selection unit 103 determines whether or not all the vehicle data has been selected in above step S414 (step S419).

When it is determined in step S419 that there is unselected vehicle data, the service candidate selection unit 103 returns to step S414. In consequence, the processes in steps S414 to S419 are executed on all the vehicle data after the exclusion in above step S413.

On the other hand, when it is determined in step S419 that all the vehicle data has been selected, the service candidate selection unit 103 proceeds to the process in step S420.

Subsequent to step S410 or step S419, the service candidate selection unit 103 determines whether or not all the service types have been selected in above step S401 (step S420). That is, the service candidate selection unit 103 determines whether or not the three service types, namely, the transportation service, the substitute driver service, and the vehicle lending service, have been selected in above step S401.

When it is determined in step S420 that there is an unselected service type, the service candidate selection unit 103 returns to step S401. In consequence, the processes in steps S401 to S420 are executed for all the service types.

On the other hand, when it is determined in step S420 that all the service types have been selected, the service candidate selection unit 103 ends the process.

As described above, in the reservation management device 10 according to the present embodiment, based on the departure place or use start location designated by the user 50 (for example, the current position of the user 50), the position of the provider 60, and the position of the vehicle 70, a plurality of moving service candidates to be presented to the user 50 is selected. Furthermore, at this time, the reservation management device 10 according to the present embodiment selects a provider 60 and a vehicle 70 that satisfy the optional conditions designated by the user 50. Consequently, the reservation management device 10 according to the present embodiment can present the moving services of a plurality of service types satisfying the designated conditions to the user 50.

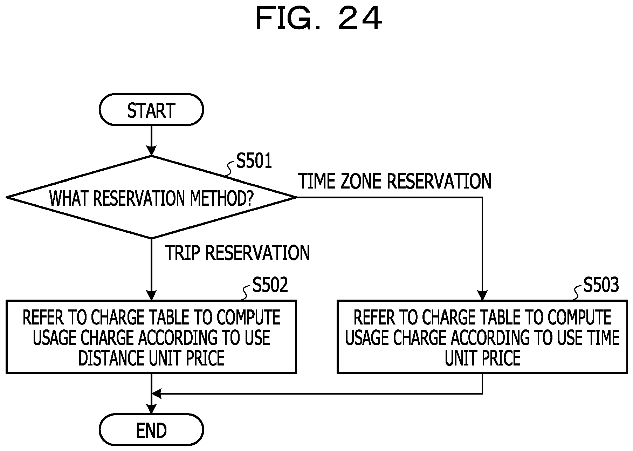

Next, details of the usage charge calculation process (the processes in steps S408 and S417 in FIGs. 22A and 22B) according to the present embodiment will be described with reference to FIG. 24. FIG. 24 is a flowchart illustrating an exemplary usage charge computation process according to the first embodiment. The usage charge calculation process illustrated in FIG. 24 is a process of calculating the usage charges of the moving service candidate provided by the provider 60 indicated by the provider data selected in step S405 in FIGs. 22A and 22B, and the moving service candidate that lends the vehicle 70 indicated by the vehicle data selected in step S414 in FIGs. 22A and 22B.

First, the charge computation unit 104 determines which of "trip reservation" and "time zone reservation" is the reservation method (step S501).

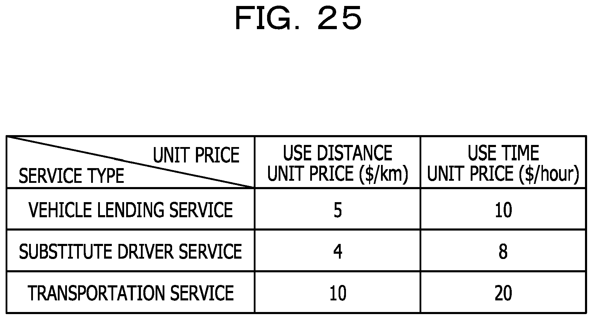

When it is determined in step S501 that the reservation method is "trip reservation", the charge computation unit 104 refers to the charge table 190, for example, illustrated in FIG. 25 to compute the usage charge according to a use distance unit price (step S502).

Here, the charge table 190 illustrated in FIG. 25 accumulates the use distance unit price indicating the unit price per unit distance for each service type. For example, the charge table 190 illustrated in FIG. 25 accumulates a use distance unit price "5" for the vehicle lending service, a use distance unit price "4" for the substitute driver service, and a use distance unit price "10" for the transportation service.

With this configuration, when the reservation method is "trip reservation", the charge computation unit 104 computes the charge according to a distance moved by the provider 60 or the vehicle 70 when providing the moving service. More specifically, when the service type is "transportation service" or "substitute driver service", a charge according to a distance moved by the provider 60 is computed; meanwhile, when the service type is "vehicle lending service", a charge according to a distance moved by the vehicle 70 is computed. Note that the distance moved by the provider 60 or the vehicle 70 is calculated by, for example, making a search for a path from the current position of the provider 60 or the vehicle 70 to the departure place, a search for a path from the departure place to the destination, and a search for a path from the destination to the current position of the provider 60 or the vehicle 70.

Meanwhile, when it is determined in step S501 that the reservation method is "time zone reservation", the charge computation unit 104 refers to the charge table 190, for example, illustrated in FIG. 25 to compute the usage charge according to a use time unit price (step S503).

Here, the charge table 190 illustrated in FIG. 25 accumulates the use time unit price indicating the unit price per unit time for each service type. For example, the charge table 190 illustrated in FIG. 25 accumulates a use time unit price "10" for the vehicle lending service, a use time unit price "8" for the substitute driver service, and a use time unit price "20" for the transportation service.

With this configuration, when the reservation method is "time zone reservation", the charge computation unit 104 computes the charge according to a time required by the provider 60 or the vehicle 70 when providing the moving service. Note that the time required by the provider 60 or the vehicle 70 can employ, for example, the total time of the time before provision, the time during provision, and the time after provision.

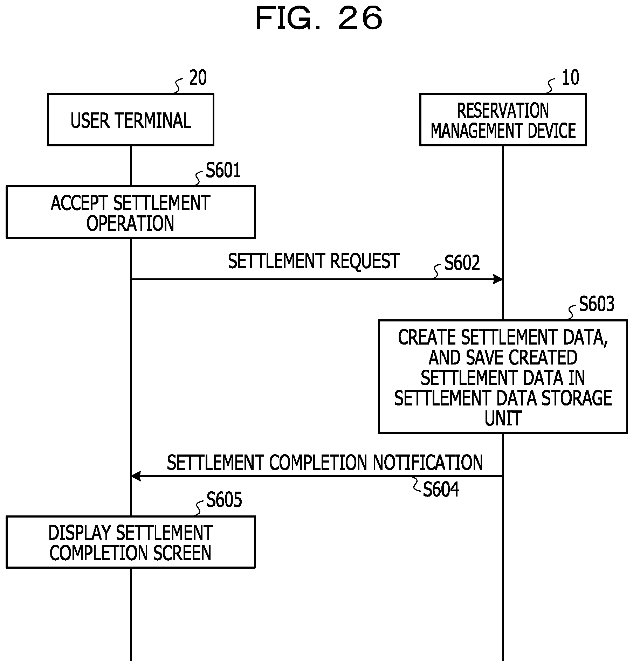

Next, a process of settling the usage charge of the moving service when the user 50 has finished using the moving service will be described with reference to FIG. 26. FIG. 26 is a sequence diagram illustrating an exemplary service use end process according to the first embodiment.

First, the operation acceptance unit 203 of the user terminal 20 accepts an input of a settlement operation (step S601). The user 50 can perform the settlement operation by pressing a button or the like indicating the settlement of the usage charge on a predetermined screen for performing the settlement of the moving service, for example.

Once the operation acceptance unit 203 accepts the settlement operation, the communication unit 201 of the user terminal 20 transmits a settlement request to the reservation management device 10 (step S602). The settlement request includes, for example, the reservation ID of the reservation data when the moving service used by the user 50 was reserved.

The settlement unit 107 of the reservation management device 10 creates settlement data, and saves the created settlement data in the settlement data storage unit 180 (step S603). At this time, the settlement unit 107 can create the user settlement data using the usage charge included in the reservation data having the reservation ID, as the payment amount. Furthermore, the user ID and the reservation ID of the user settlement data can employ the user ID and the reservation ID included in the reservation data.

Similarly, the settlement unit 107 can create the provider settlement data using the usage charge included in the reservation data having the reservation ID, as the sales amount. Furthermore, the travel ID of the provider settlement data can employ the travel ID included in the reservation data. Moreover, the provider ID of the provider settlement data can employ the provider ID set in the schedule data associated with the travel ID included in the reservation data.

Note that the settlement unit 107 of the reservation management device 10 may perform a settlement process for the payment amount of the user 50 and the sales amount of the provider 60 by transmitting the created settlement data to an external system (for example, a bank system, a credit card settlement system, or the like).

Next, the communication unit 101 of the reservation management device 10 transmits a settlement completion notification indicating that the settlement has been completed, to the user terminal 20 (step S604).

Upon receiving the settlement completion notification through the communication unit 201, the display control unit 202 of the user terminal 20 displays a settlement completion screen indicating that the settlement has been completed (step S605). With this step, the user 50 can know that the settlement of the usage charge of the moving service has been completed.

Note that, in the present embodiment, the moving services are assumed as the transportation service, the vehicle lending service, and the substitute driver service, but are not limited to these. The moving services may include, for example, a service using public transport facilities such as a bus or train.

### (Second Embodiment)

Next, a second embodiment will be described. The second embodiment will describe a case where, for example, a moving service is provided by separating one moving service, or a moving service combining a plurality of moving services is provided. An example of such a case is a case where the transportation service is separated into a substitute driver service and a vehicle lending service such that the separated substitute driver service is provided or the separated vehicle lending service is provided, for example. Furthermore, another example is a case where a transportation service is provided by combining the substitute driver service and the vehicle lending service, for example. Consequently, for example, even when a provider 60 that can provide the transportation service is not located around the departure place, the user 50 can use a transportation service combining a provider 60 that can provide the substitute driver service and a vehicle 70 lent by the vehicle lending service. Similarly, for example, even when a provider 60 that can provide the substitute driver service is not located around the departure place, the user 50 can use a substitute driver service provided by a provider 60 that can provide the transportation service.

In addition, the second embodiment will also describe a case where, in providing a moving service, this moving service is provided using another moving service. An example of such a case is a case where a provider 60 that provides the substitute driver service first moves to the departure place using the transportation service provided by another provider 60 and then provides the substitute driver service, for example. Consequently, for example, a provider 60 who cannot provide the substitute driver service because the provider 60 will not be in time for the departure time on foot is allowed to provide the substitute driver service.

Note that, in the second embodiment, differences from the first embodiment will be mainly described; similar components as those in the first embodiment will be denoted with the same reference signs as those in the first embodiment, and a description thereof will be omitted.

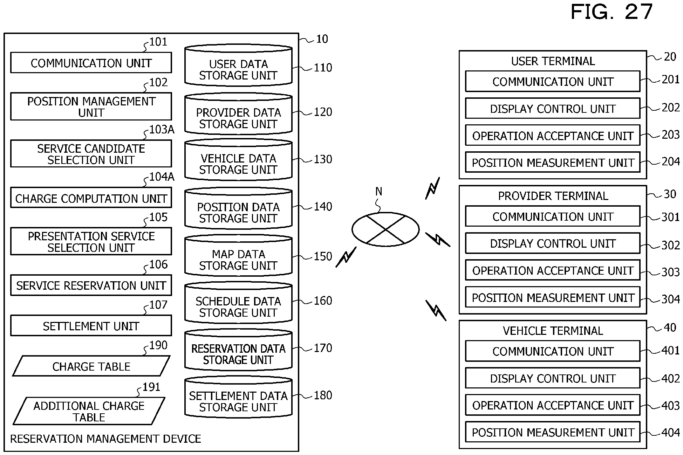

First, a functional configuration of a moving service reservation system 1 according to the present embodiment will be described with reference to FIG. 27. FIG. 27 is a diagram illustrating an exemplary functional configuration of the moving service reservation system 1 according to the second embodiment.

As illustrated in FIG. 27, the reservation management device 10 according to the present embodiment includes a service candidate selection unit 103A and a charge computation unit 104A. The service candidate selection unit 103A selects a moving service candidate that is allowed to be provided by separating one moving service or combining a plurality of moving services. Furthermore, the service candidate selection unit 103A selects a moving service candidate that is allowed to be provided by using another moving service.

When another moving service is used in providing the moving service, the charge computation unit 104A refers to an additional charge table 191 to calculate a charge (additional charge) generated by the use of the another moving service. Note that the details of the additional charge table 191 will be described later.

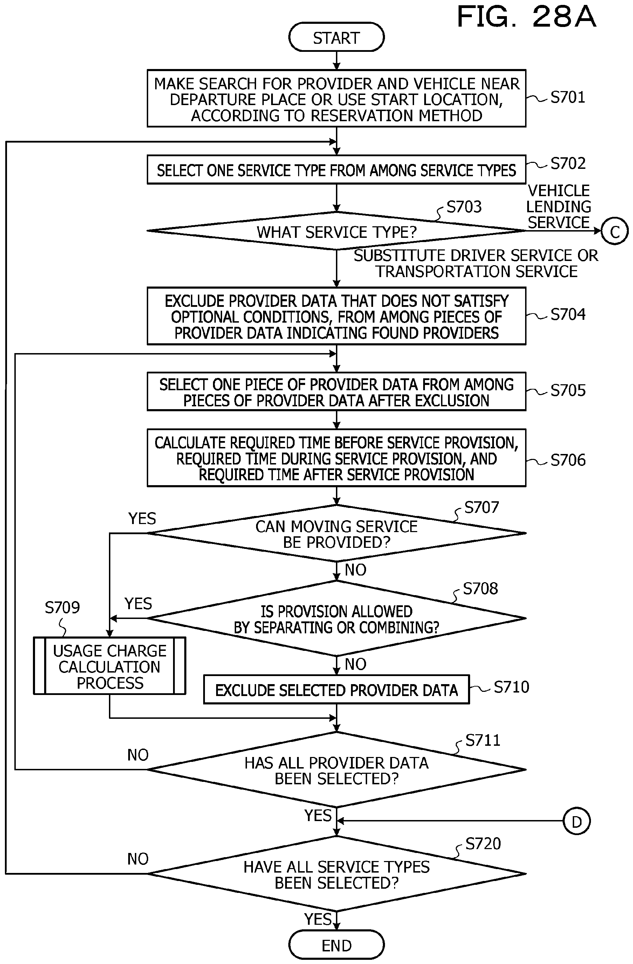

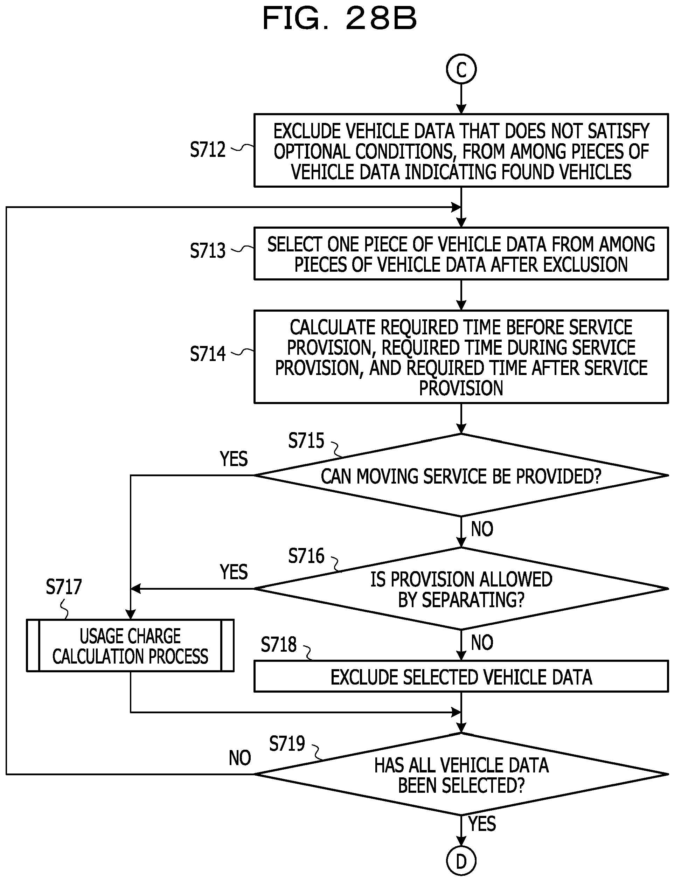

Next, the details of a process of selecting a moving service candidate when a moving service can be provided by separating one moving service or combining a plurality of moving services (the process in step S304 in FIGs. 19A and 19B) will be described with reference to FIGs. 28A and 28B. FIGs. 28A and 28B are a flowchart illustrating an exemplary moving service candidate selection process according to the second embodiment.

First, the service candidate selection unit 103A makes a search for a provider 60 and a vehicle 70 located within a predetermined range from the departure place or the use start location, according to the reservation method (step S701). That is, when the reservation method is "trip reservation", the service candidate selection unit 103A refers to a provider data storage unit 120, a vehicle data storage unit 130, and a position data storage unit 140 to make a search for a provider 60 and a vehicle 70 located within a predetermined range from the departure place included in the trip reservation conditions. Meanwhile, when the reservation method is "time zone reservation", the service candidate selection unit 103A refers to the provider data storage unit 120, the vehicle data storage unit 130, and the position data storage unit 140 to make a search for a provider 60 and a vehicle 70 located within a predetermined range from the use start location included in the time zone reservation conditions.

Next, the service candidate selection unit 103A selects one service type from among the service types (step S702). That is, the service candidate selection unit 103A selects one service type from among "vehicle lending service", "substitute driver service", and "transportation service".

Next, the service candidate selection unit 103A determines which of "vehicle lending service", "substitute driver service", and "transportation service" is the selected service type (step S703).

When it is determined in step S402 that the selected service type is "substitute driver service" or "transportation service", the service candidate selection unit 103A refers to a user data storage unit 110 and the provider data storage unit 120 to exclude provider data that does not satisfy the optional conditions, from among pieces of the provider data indicating the providers 60 found in above step S701 (step S704).

Next, the service candidate selection unit 103A selects one piece of the provider data from among pieces of the provider data after the exclusion (step S705).

Next, the service candidate selection unit 103A calculates the time before provision, the time during provision, and the time after provision of a provider 60 indicated by the provider data selected in above step S706 (step S706). Note that the process in step S706 is similar to the process in step S406 in FIGs. 22A and 22B.

Next, the service candidate selection unit 103A determines whether or not the provider 60 indicated by the selected provider data can provide the moving service of the service type selected in above step S702 (step S707). That is, the service candidate selection unit 103A determines that the moving service of the selected service type can be provided when both of following (1) and (2) are satisfied.
(1) Referring to the provider data storage unit 120, in the providable service type of the selected provider data, "○" is set for the moving service of the service type selected in above step S702.
(2) Similar to step S407 in FIGs. 22A and 22B, referring to a schedule data storage unit 160, it is determined that the provider 60 indicated by the selected provider data can provide the moving service, based on the calculated time before provision, time during provision, and time after provision.

In step S707, when it is determined that the provider 60 cannot provide the moving service, the service candidate selection unit 103A determines whether or not the moving service of the selected service type can be provided by separating the moving service that can be provided by the provider 60 or combining a moving service that can be provided by another provider 60 (step S708).

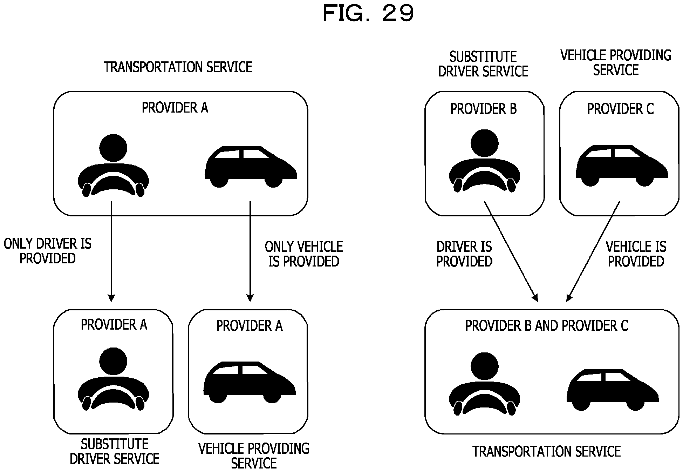

For example, as illustrated in FIG. 29, when the provider 60 (provider A) can provide the transportation service, the provider 60 can also provide the substitute driver service and the vehicle providing service by separating the transportation service. Therefore, for example, when the service type selected in above step S702 is "substitute driver service", and the service type that can be provided in the provider data selected in above step S706 is "transportation service", the service candidate selection unit 103A determines whether or not the substitute driver service can be provided by the provider 60 indicated by the provider data.

Furthermore, for example, as illustrated in FIG. 29, when the provider 60 (provider B) can provide the substitute driver service, the provider 60 (provider B) can provide the transportation service by combining the substitute driver service with the vehicle lending service provided by another provider 60 (provider C). Therefore, for example, when the service type selected in above step S702 is "transportation service", and the service type that can be provided in the provider data selected in above step S706 is "substitute driver service", the service candidate selection unit 103A determines whether or not the transportation service can be provided by the provider 60 indicated by the provider data and the another provider 60 that provides the vehicle lending service. Note that, in this case, it may be determined whether or not the provider 60 (provider B) can provide the transportation service, in consideration of the moving time to the vehicle 70 lent by the another provider 60 (provider C).

More specifically, the service candidate selection unit 103A calculates a time required for the provider 60 (provider B) to move to the vehicle 70, and a time required for the provider 60 (provider B) to move to the departure place (or the use start location) by the vehicle 70. Then, when the transportation service provided by the provider 60 (provider B) and the vehicle 70 can be provided at the departure time (or the use start time), the service candidate selection unit 103A determines that the transportation service can be provided.

When it is determined in step S707 or S708 that the moving service can be provided, the charge computation unit 104A calculates the usage charge of the moving service candidate provided by the provider 60 indicated by the provider data selected in above step S705 (step S709). Note that the usage charge calculation process is similar to that in the first embodiment. However, when a moving service combining a plurality of moving services is provided (for example, when the transportation service is provided by combining the substitute driver service and the vehicle lending service), the usage charge is calculated for each moving service provided by each provider 60.

On the other hand, when it is determined in step S708 that the moving service cannot be provided, the service candidate selection unit 103A excludes the provider data selected in above step S705 (step S710).

Subsequent to step S709 or step S710, the service candidate selection unit 103A determines whether or not all the provider data has been selected in above step S705 (step S711) .

When it is determined in step S711 that there is unselected provider data, the service candidate selection unit 103A returns to step S705. In consequence, the processes in steps S705 to S711 are executed on all the provider data after the exclusion in above step S704.

On the other hand, when it is determined in step S711 that all the provider data has been selected, the service candidate selection unit 103A proceeds to the process in step S720.

When it is determined in step S703 that the selected service type is "vehicle lending service", the service candidate selection unit 103A refers to the vehicle data storage unit 130 to exclude vehicle data that does not satisfy the optional conditions, from among pieces of the vehicle data indicating the vehicles 70 found in above step S701 (step S712).

Next, the service candidate selection unit 103A selects one piece of the vehicle data from among pieces of the vehicle data after the exclusion (step S713).

Next, the service candidate selection unit 103A calculates the time before provision, the time during provision, and the time after provision of a vehicle 70 indicated by the vehicle data selected in above step S713 (step S714). Note that the process in step S714 is similar to the process in step S415 in FIGs. 22A and 22B.

Next, the service candidate selection unit 103A determines whether or not the vehicle lending service can be provided by the vehicle 70 indicated by the selected vehicle data (step S715). That is, the service candidate selection unit 103A determines that the vehicle lending service can be provided when both of following (1) and (2) are satisfied.
(1) Referring to the provider data storage unit 120 and the vehicle data storage unit 130, in the providable service type of the provider data associated with the selected vehicle data, "○" is set for the vehicle providing service.
(2) Similar to step S416 in FIGs. 22A and 22B, referring to the schedule data storage unit 160, it is determined that the vehicle 70 indicated by the selected vehicle data can be lent by the vehicle lending service, based on the calculated time before provision, time during provision, and time after provision.

When it is determined in step S715 that the vehicle 70 cannot be lent by the vehicle lending service, the service candidate selection unit 103A determines whether or not the vehicle lending service is allowed to be provided by separating the transportation service using the vehicle 70 (step S716). That is, the service candidate selection unit 103A determines whether or not the vehicle 70 used for the transportation service can be lent as a vehicle lending service.

When it is determined in step S715 or S716 that the vehicle 70 can be lent by the vehicle lending service, the charge computation unit 104A calculates the usage charge of the moving service candidate that lends the vehicle 70 indicated by the vehicle data selected in above step S713 (step S717). Note that the usage charge calculation process is similar to that in the first embodiment.

On the other hand, when it is determined in step S716 that the vehicle lending service cannot be provided, the service candidate selection unit 103A excludes the vehicle data selected in above step S713 (step S718).

Subsequent to step S717 or step S719, the service candidate selection unit 103A determines whether or not all the vehicle data has been selected in above step S713 (step S719).

When it is determined in step S719 that there is unselected vehicle data, the service candidate selection unit 103A returns to step S713. In consequence, the processes in steps S713 to S719 are executed on all the vehicle data after the exclusion in above step S712.

On the other hand, when it is determined in step S719 that all the vehicle data has been selected, the service candidate selection unit 103A proceeds to the process in step S720.

Subsequent to step S711 or step S719, the service candidate selection unit 103A determines whether or not all the service types have been selected in above step S702 (step S720).

When it is determined in step S720 that there is an unselected service type, the service candidate selection unit 103A returns to step S702. In consequence, the processes in steps S701 to S720 are executed for all the service types.

On the other hand, when it is determined in step S720 that all the service types have been selected, the service candidate selection unit 103A ends the process.

As described above, in the reservation management device 10 according to the present embodiment, when a moving service candidate is selected, for example, after separating the transportation service into the substitute driver service and the vehicle lending service, these substitute driver service and vehicle lending service can be selected as moving service candidates. Similarly, in the reservation management device 10 according to the present embodiment, for example, a transportation service combining the substitute driver service and the vehicle lending service can be selected as a moving service candidate.

Consequently, for example, even when a provider 60 that can provide the transportation service is not located around the departure place, the user 50 can use a transportation service combining a provider 60 that can provide the substitute driver service and a vehicle 70 lent by the vehicle lending service. Similarly, for example, even when a provider 60 that can provide the substitute driver service is not located around the departure place, the user 50 can use a substitute driver service provided by a provider 60 that can provide the transportation service.

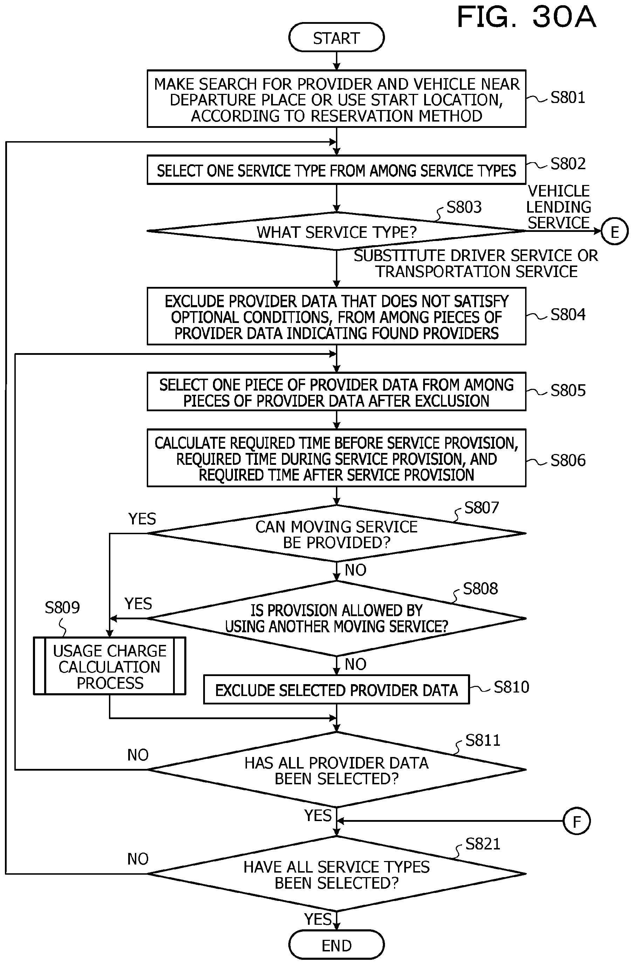

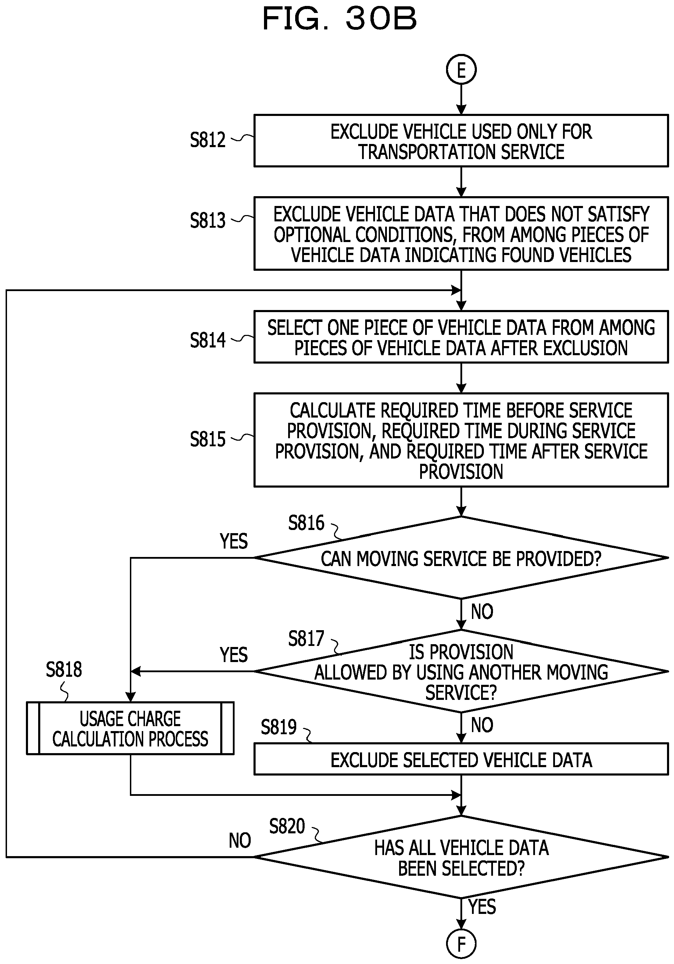

Next, a case where, in providing a certain moving service, also another moving service is used to provide the certain moving service will be described with reference to FIGs. 30A and 30B. FIGs. 30A and 30B are a flowchart illustrating another exemplary moving service candidate selection process according to the second embodiment.

First, steps S801 to S806 in FIGs. 30A and 30B are each similar to steps S701 to S706 in FIGs. 28A and 28B, and thus a description thereof will be omitted. Furthermore, step S807 in FIGs. 28A and 28B is similar to step S407 in FIGs. 22A and 22B, and thus a description thereof will be omitted.

When it is determined in step S807 that the moving service cannot be provided, the service candidate selection unit 103A determines whether or not the moving service is allowed to be provided by using another moving service (step S808) .

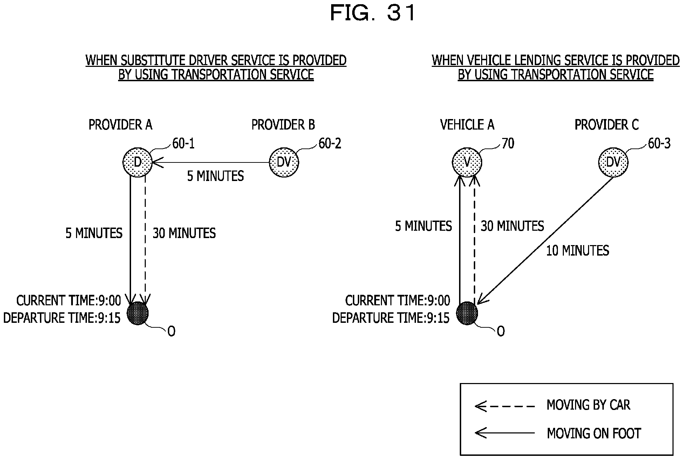

For example, as illustrated in FIG. 31, it is assumed that the current time is "9:00" and the departure time is "9:15". Furthermore, it is assumed that it takes "30 minutes" to move on foot from the position of a provider 60-1 to a departure place O. In this case, the provider 60-1 cannot provide the substitute driver service because the provider 60-1 will not be in time for the departure time "9:15".

In contrast to this, it is assumed that it takes "5 minutes" to move by car from the position of a provider 60-2 (provider B), which provides the transportation service, to the position of the provider 60-1, and it takes "5 minutes" to move by car from the position of the provider 60-1 to the departure place O. In this case, the provider 60-1 can arrive at the departure place O at "9:10" by using the transportation service provided by the provider 60-2. Therefore, in this case, the provider 60-1 is allowed to provide the substitute driver service by using the transportation service provided by the provider 60-2. Consequently, for example, even in such a case that only the provider A is located around the departure place O among the providers 60 that provide the substitute driver service, the user 50 is allowed to use the substitute driver service.

When it is determined in step S807 or S808 that the moving service can be provided, the charge computation unit 104A calculates the usage charge of the moving service candidate provided by the provider 60 indicated by the provider data selected in above step S805 (step S809). At this time, when the use of another moving service is also necessary, the charge computation unit 104A also calculates an additional charge generated by using the another moving service. Note that the details of the usage charge calculation process will be described later.

The following processes in steps S811 and S812 in FIGs. 30A and 30B are similar to the processes in steps S410 and S411 in FIGs. 22A and 22B, and thus a description thereof will be omitted. Furthermore, the processes in steps S813 to S815 in FIGs. 30A and 30B are similar to the processes in steps S712 to S714 in FIGs. 28A and 28B, and thus a description thereof will be omitted. Moreover, the process in step S816 in FIGs. 30A and 30B is similar to the process in step S516 in FIGs. 22A and 22B, and thus a description thereof will be omitted.

When it is determined in step S816 that the vehicle lending service cannot be provided, the service candidate selection unit 103A determines whether or not the vehicle lending service is allowed to be provided by using another moving service (step S817).

For example, as illustrated in FIG. 31, when the user 50 rents the vehicle 70 (vehicle A) located around the departure place O by the vehicle lending service, it is assumed that it takes "30 minutes" to move on foot from the departure place O to the position of the vehicle 70. In this case, the user 50 cannot use the vehicle lending service because the user 50 will not be in time for the departure time "9:15".

In contrast to this, it is assumed that it takes "10 minutes" to move by car from the position of a provider 60-3 (provider C), which provides the transportation service, to the departure place O, and it takes "5 minutes" to move by car from the departure place O to the position of the vehicle 70. In this case, the user 50 can arrive at the departure place O at "9:15" by using the transportation service provided by the provider 60-3. Therefore, in this case, the user 50 is allowed to use the vehicle lending service by using the transportation service provided by the provider 60-3. Consequently, for example, even in such a case that only the vehicle A is located around the departure place O among the vehicles 70 that can be lent for the vehicle lending service, the user can use the vehicle lending service.

When it is determined in step S816 or S817 that the moving service (vehicle providing service) can be provided, the charge computation unit 104A calculates the usage charge of the moving service candidate that lends the vehicle 70 indicated by the vehicle data selected in above step S814 (step S818). At this time, when the use of another moving service is also necessary, the charge computation unit 104A also calculates an additional charge generated by using the another moving service. Note that the details of the usage charge calculation process will be described later.

The following processes in steps S820 and S821 in FIGs. 30A and 30B are similar to the processes in steps S419 and S420 in FIGs. 22A and 22B, and thus a description thereof will be omitted.

As described above, in the reservation management device 10 according to the present embodiment, when a moving service candidate is selected, a moving service candidate using another moving service can be selected. Consequently, even a provider 60 that cannot provide the moving service because, for example, the provider 60 will not be in time for the departure time is allowed to provide the moving service by using another moving service provided by another provider 60.

Note that, besides the cases exemplified in FIG. 31, diverse modes are conceivable as the case of providing the moving service using another moving service. For example, when a certain vehicle 70 is lent to the user 50 by the vehicle providing service, a mode in which a provider 60 that can provide the substitute driver service moves the vehicle 70 to the current position of the user 50 is conceivable. Furthermore, for example, a mode in which a vehicle 70 dropped off by the user 50 at the destination is moved to the original position by a provider 60 that can provide the substitute driver service is conceivable.

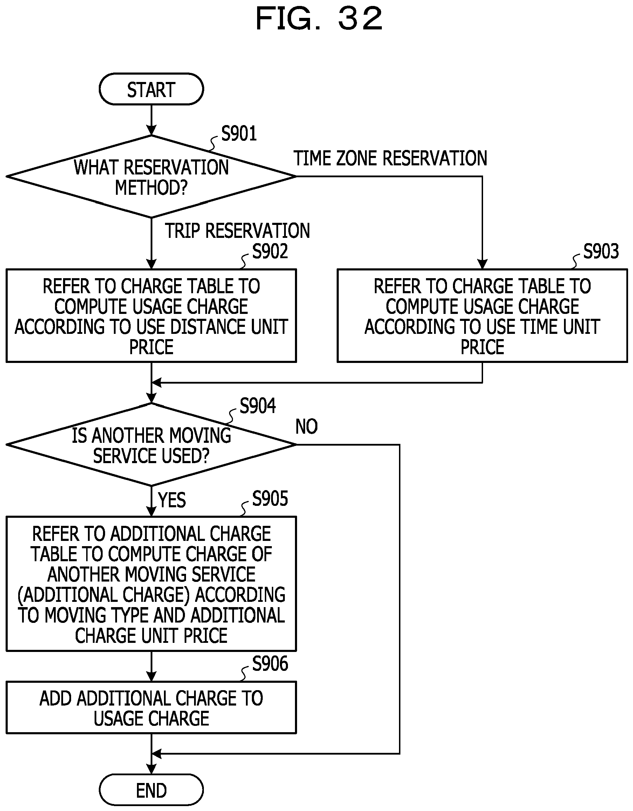

Next, details of the usage charge calculation process (the processes in steps S809 and S818 in FIGs. 30A and 30B) according to the present embodiment will be described with reference to FIG. 32. FIG. 32 is a flowchart illustrating an exemplary usage charge computation process according to the second embodiment. The usage charge calculation process illustrated in FIG. 32 is a process of calculating the usage charges of the moving service candidate provided by the provider 60 indicated by the provider data selected in step S805 in FIGs. 30A and 30B, and the moving service candidate that lends the vehicle 70 indicated by the vehicle data selected in step S814 in FIGs. 30A and 30B. Note that the processes in steps S901 to S903 in FIG. 32 are similar to the processes in steps S501 to S503 in FIG. 24, and thus a description thereof will be omitted.

Subsequent to step S902 or step S903, the charge computation unit 104A determines whether or not another moving service is used (step S904).

When it is determined in step S904 that another moving service is not used, the charge computation unit 104A ends the process.

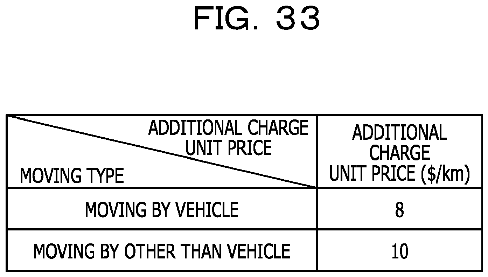

On the other hand, when it is determined in step S904 that another moving service is used, the charge computation unit 104A refers to the additional charge table 191, for example, illustrated in FIG. 33 to compute the additional charge according to a moving type and an additional charge unit price (step S905).

Here, the additional charge table 191 illustrated in FIG. 33 accumulates the additional charge unit price indicating the unit price of the additional charge per unit distance for each moving type. The moving type refers to a moving means used by a provider 60 that provides another moving service. For example, when the another moving service provider 60 provides the transportation service, the moving type is given as "moving by vehicle". In this case, the charge computation unit 104A computes the additional charge according to the distance moved by the vehicle.

Meanwhile, for example, in a case where the another moving service provider 60 provides the substitute driver service, when the provider 60 moves on foot to a certain point and thereafter moves by vehicle, the moving type is given as both of "moving by other than vehicle" and "moving by vehicle". In this case, the charge computation unit 104A computes the additional charge according to the distance moved by other than the vehicle and the distance moved by the vehicle.

Next, the charge computation unit 104A adds the additional charge computed in above step S905 to the usage charge computed in step S902 or step S903 (step S906). With this step, the usage charge in the case of providing the moving service using another moving service as well is calculated.

Although the embodiments of the present invention have been described in detail thus far, the present invention is not limited to such specific embodiments and diverse modifications and alterations can be made within the scope of the present invention described in the claims.

### REFERENCE SIGNS LIST

- 1: Moving service reservation system
- 10: Reservation management device
- 20: User terminal
- 30: Provider terminal
- 40: In-vehicle device
- 101: Communication unit
- 102: Position management unit
- 103: Service candidate selection unit
- 104: Charge computation unit
- 105: Presentation service selection unit
- 106: Service reservation unit
- 107: Settlement unit
- 110: User data storage unit
- 120: Provider data storage unit
- 130: Vehicle data storage unit
- 140: Position data storage unit
- 150: Map data storage unit
- 160: Schedule data storage unit
- 170: Reservation data storage unit
- 180: Settlement data storage unit
- 190: Charge table

## Claims

1. A moving means display method executed by a computer, the moving means display method comprising:
selecting, based on first position information that indicates a position of a user and second position information that indicates positions of one or more respective vehicles, one or more vehicles located within a predetermined range from the position of the user, from among the one or more respective vehicles;
selecting, based on the first position information and third position information that indicates positions of one or more respective drivers who each drive a vehicle, one or more drivers located within a predetermined range from the position of the user, from among the one or more respective drivers; and
displaying, on a terminal used by the user, at least any two types of services from among a service in which any one of the selected one or more vehicles is lent to the user, a service in which any one of the selected one or more drivers drives a vehicle of the user as a substitute driver, and a service in which any one of the selected one or more drivers drives a vehicle other than the vehicle of the user to transport the user.

2. The moving means display method according to claim 1, wherein
the transportation service includes
a service in which any one of the selected one or more drivers drives any one of the selected one or more vehicles to transport the user, and
the selecting selects, as the one or more drivers, one or more drivers who arrive at the position of the user by way of a position of any one of the selected one or more vehicles by a time designated by the user, from among the one or more drivers located within a predetermined range from the position of the user.

3. The moving means display method according to claim 2, wherein
the substitute driver service includes
a service in which, with regard to any one of the selected one or more drivers, another driver drives a vehicle to transport the any one driver, and
the selecting selects, as the one or more drivers, one or more drivers who arrive at the position of the user by a time designated by the user owing to that the another driver drives a vehicle to transport the one or more drivers to be selected, from among the one or more drivers located within a predetermined range from the position of the user.

4. A moving means display device comprising:
a first selection unit that selects, based on first position information that indicates a position of a user and second position information that indicates positions of one or more respective vehicles, one or more vehicles located within a predetermined range from the position of the user, from among the one or more respective vehicles;
a second selection unit that selects, based on the first position information and third position information that indicates positions of one or more respective drivers who each drive a vehicle, one or more drivers located within a predetermined range from the position of the user, from among the one or more respective drivers; and
a display control unit that displays, on a terminal used by the user, at least any two types of services from among a service in which any one of the one or more vehicles selected by the first selection unit is lent to the user, a service in which any one of the one or more drivers selected by the second selection unit drives a vehicle of the user as a substitute driver, and a service in which any one of the one or more drivers selected by the second selection unit drives a vehicle other than the vehicle of the user to transport the user.

5. The moving means display device according to claim 4, wherein
the transportation service includes
a service in which any one of the selected one or more drivers drives any one of the selected one or more vehicles to transport the user, and
the second selection unit
selects one or more drivers who arrive at the position of the user by way of a position of any one of the selected one or more vehicles by a time designated by the user, from among the one or more drivers located within a predetermined range from the position of the user.

6. The moving means display device according to claim 5, wherein
the substitute driver service includes
a service in which, with regard to any one of the selected one or more drivers, another driver drives a vehicle to transport the any one driver, and
the second selection unit
selects one or more drivers who arrive at the position of the user by a time designated by the user owing to that the another driver drives a vehicle to transport the one or more drivers to be selected, from among the one or more drivers located within a predetermined range from the position of the user.

7. A moving means display program that causes a computer to execute:
selecting, based on first position information that indicates a position of a user and second position information that indicates positions of one or more respective vehicles, one or more vehicles located within a predetermined range from the position of the user, from among the one or more respective vehicles;
selecting, based on the first position information and third position information that indicates positions of one or more respective drivers who each drive a vehicle, one or more drivers located within a predetermined range from the position of the user, from among the one or more respective drivers; and
displaying, on a terminal used by the user, at least any two types of services from among a service in which any one of the selected one or more vehicles is lent to the user, a service in which any one of the selected one or more drivers drives a vehicle of the user as a substitute driver, and a service in which any one of the selected one or more drivers drives a vehicle other than the vehicle of the user to transport the user.

8. The moving means display program according to claim 7, wherein
the transportation service includes
a service in which any one of the selected one or more drivers drives any one of the selected one or more vehicles to transport the user, and
the selecting selects, as the one or more drivers, one or more drivers who arrive at the position of the user by way of a position of any one of the selected one or more vehicles by a time designated by the user, from among the one or more drivers located within a predetermined range from the position of the user.

9. The moving means display program according to claim 8, wherein
the substitute driver service includes
a service in which, with regard to any one of the selected one or more drivers, another driver drives a vehicle to transport the any one driver, and
the selecting selects, as the one or more drivers, one or more drivers who arrive at the position of the user by a time designated by the user owing to that the another driver drives a vehicle to transport the one or more drivers to be selected, from among the one or more drivers located within a predetermined range from the position of the user.
